# EUROPEAN PATENT APPLICATION

(11) **EP 1 158 396 A1**
(43) Date of publication of application: **28.11.2001**
(21) Application number: 00970209.3
(22) Date of filing: 30.10.2000
(51) Int. Cl.: G06F 3/06, G06F 13/00, G06F 12/00

(54) **DATABASE SYSTEM**

(30) Priority: 29.10.1999 JP 30918699
(71) Applicant: V-Sync Co., Ltd., Tokyo 150-0001 (JP)
(72) Inventor: OHTA, Shingo, Inter Gate Systems Co., Ltd., Okayama-shi, Okayama 701-0163 (JP)
(74) Representative: Weitzel, David Stanley
(86) International application number: JP0007631
(87) International publication number: WO0131430

(57) **Abstract**

The data base system of the present invention includes a gateway and a plurality of server units each containing a controller and memory means. When an abnormity occurs in data stored in any one of the server units, the gateway can detect such an abnormity and then send a restoration command to the controller of one server unit (storing the same data that can be used for restoration) among remaining server units in accordance with a predetermined redundancy. The one server unit, upon receiving the restoration command, reads out the same data (for restoration) from its own hard disc and transmits the data to a normal server unit and store the same in its memory means.

The information distribution system of the present invention is so formed that each information terminal equipment can send a data distribution request to an area management center. If an information data requested by the area management center is existing in a data base system of a central management center, the requested information data is directly sent to the information terminal equipment. On the other hand, if the information data requested by the area management center is not existing in the data base system, the area management center will send the data distribution request to an upstream area management center. If the requested data is still not existing there, the upstream area management center will send the data distribution request to a further upstream area management center. Once, as a final result, the data distribution request arrives at a central management center, the requested data distribution may be effected in the downstream direction. Furthermore, each area management center operates to store in its data base system the requested information data transmitted from a central management center.

## Description

### TECHNICAL FIELD

The present invention relates to a data base system and an information distribution system each having an excellent fault tolerant property and an excellent transaction property.

### BACKGROUND OF THE INVENTION

With the development of communication networks using optical fiber transmission systems, there have been suggested and in test several improved information distribution systems for transmitting various information at a high speed and thus bringing about an improved convenience to users.

For example, as a method for selling contents informations such as musical information and image information, these contents informations are usually recorded in information recording medium such as CD (Compact Disc) or MD (Mini Disc), so that they can be sold to users through department stores or shops . However, another method for selling these informations is to establish an information distribution system including a plurality of terminal equipments located in user's areas. By transmitting contents information to the terminal equipments through a communication network, users can obtain their desired informations with a great ease.

A conventional information distribution system is usually so formed that each information terminal equipment contains a memory device such as a large capacity hard disc. Various kinds of information may be transmitted through a communication network from a computer system provided within an information distribution station located on information distributor side, so that the transmitted information can be received by and accumulated in the terminal equipments.

Then, a user can operate on an operating panel associated with a terminal equipment to select his or her desired song. In this way, the terminal equipment can search for the desired song from a great numbers of songs accumulated in the memory device contained in the terminal equipment, so that the searched contents information can be recorded in a recording medium to be sold to the user.

In using the above-described conventional information distribution system, information may be transmitted through a communication network from an information distribution station to each terminal equipment, so that it is necessary for such an information distribution system to employ a communication system to in advance accumulate contents information in the memory device contained in each terminal equipment. Accordingly, a user has to select his or her desired contents information from a large amount of information stored in the memory device. As a result, such kind of a system cannot be called an On-Demand system capable of selecting a large amount of contents information stored in the distribution station located on the distributor side.

Further, contents information such as music data or image data usually includes those which were produced in old times and those which were produced in present time and very popular but in short recycle, belonging to various different fields corresponding to various different hobbies. Obviously, it is impossible for such a large amount of information belonging to various fields to be stored in advance in a memory device contained in a conventional terminal equipment. Accordingly, the above-described conventional information distribution system fails to provide a large amount and various kinds of information data.

Moreover, even if one may try to carry out an On-Demand type information distribution on the base of the above-described conventional information distribution system, it needs a considerably long time for the distribution station to send out all the contents informations selected by a user. Consequently, a user has to wait for a long time until he or she can obtain his or her desired contents informations.

On the other hand, if one tries to reduce a necessary time for the distribution station to send out all the contents information requested by a user, it will be necessary to lay down a specific communication line having a large transmission capacity. However, in certain areas which are allowed to use only communication lines having a limited transmission capacity, it is impossible for the above-descried conventional distribution system to effectively perform a desired information distribution.

In view of the above, since an information distribution system is usually required to deal with a large amount of contents informations, it has become extremely important for such an information distribution system to be equipped with a data base system having an excellent fault tolerant property, thereby ensuring that the whole information distribution system has an excellent fault tolerant property.

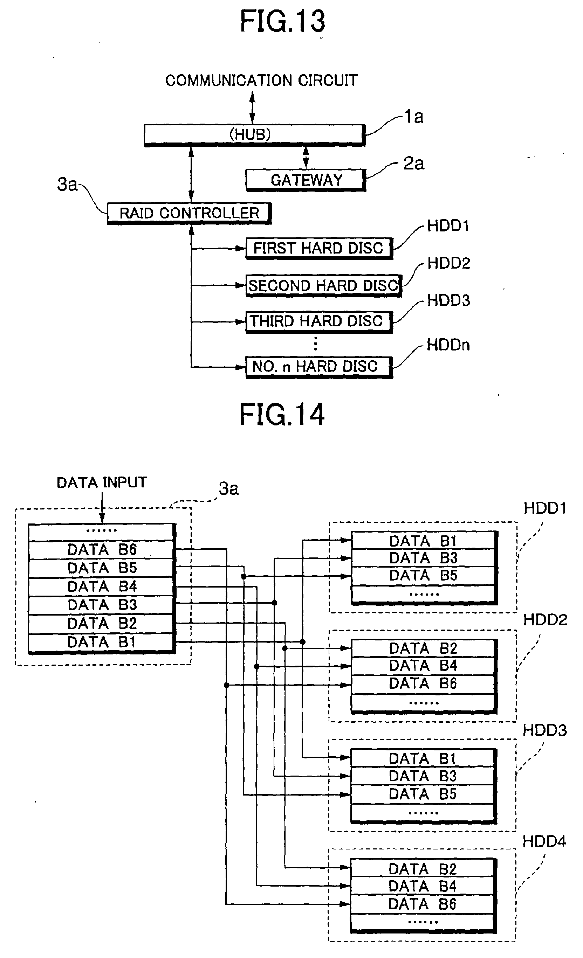

On the other hand, there has been known a RADI (Redundant Arrays of Inexpensive Disk) system which is for use in establishing a fault tolerant system. In fact, such a RADI system is often used in a data base server or a file server for conducting computer communication by way of a communication network. Fig. 13 shows an example of a mirroring type RAID system which is used in a data base server or a file server.

As shown in Fig. 13, the mirroring type RAID system comprises a HUB 1a serving as a network interface connected with a communication line, a gateway 2a and a RAID controller both connected with the HUB 1a, a plurality of hard discs HDD1 - HDDn connected with the RADI controller 3a..

The gateway 2a is provided to operate in a manner such that once there is a request for writing or reading data transmitted hereto via HUB 1a from a communication line, such a request will be fed as a command to the RADI controller 3a.

The RAID controller 3a is provided such that once it receives a data writing command fed from the gateway 2a, it will operate so that the RAID system can store in any one of the hard discs HDD1 - HDDn any information data transmitted through the HUB 1a from the communication line. Further, the RAID controller 3a can also execute its controlling action such that once it receives a data reading command fed from the gate way 2a, it will operate so that the RAID system can read the requested data from one hard disc storing the requested data, and then transmit the data to the communication line via the HUB 1a.

Here, as shown in Fig. 14, the RAID controller 3a, upon receiving a data writing command from the gate way 2a, will operate in accordance with the redundancy of data B1, B2, B3 ...... transmitted successively via the HUB 1a from the communication line, so that each data will be stored in an appropriate hard disc in accordance with its redundancy. For example, data B1, B3 and B5 are stored in the hard discs HDD1 and HDD3, while data B2, B4 and B6 are stored in the hard discs HDD2 and HDD4.

Then, the RAID controller 3a, on receiving a data reading command (for example, a request for reading out data B1), will operate for the system to read data B1 from a hard disc (for example, the hard disc HDD1) whose preference order has been set higher than that of the hard disc HDD3. The data B1 read from the hard disc HDD1 is then sent via HUB 1a to the communication line.

In this way, since the above-described RAID system can store the same identical data in a plurality of hard discs in accordance with their redundancies, it is allowed to obtain an advantage that even if a fault occurs in one data stored in one hard disc, it is still possible to read the same identical data from other hard disc, thereby forming a fault tolerant system. Accordingly, if such a system is used as a data base system in an information distribution station or its relay station, it is possible to improve the reliability of the information distribution station or its relay station.

However, the above-described conventional RAID system requires that the RAID controller 3a should control data writing into and data reading from all the hard discs, HDD1 - HDDn. For this reason, if a failure occurs in the RAID controller 3a, all the data writing into and data reading from all these hard discs will be stopped, and a repairing operation is usually difficult.

Furthermore, a data base system is usually required to be so formed that each of the hard discs HDD1 - HDDn can independently operate with respect to external surrounding machines or networks. However, since the hard discs HDD1 - HDDn are all under the control of the RAID controller 3a, it has been proved difficult to establish such a data base system capable of performing such a flexible operation (each hard disc can independently operate with respect to external surrounding machines or networks).

The present invention has been accomplished in order to solve the above-described problem, its object is to provide an improved data base system and an improved information distribution system, each having an improved fault tolerant property and an excellent transaction performance.

### DISCLOSURE OF THE INVENTION

A data base system of the present invention includes a plurality of unit apparatuses each containing memory means, the data base system being capable of recording data in the memory means in accordance with predetermined redundancies, said data base system comprising a controller provided in each unit apparatus; and a gateway for communications among the controllers. When an abnormity occurs in any one of the unit apparatus, the gateway determines an abnormal unit apparatus involving the abnormity, and to send a restoration command to a controller provided in a normal unit apparatus storing the same data (restoration data) as previously stored in the abnormal unit apparatus. Meanwhile, the controller of the normal unit apparatus which has received the restoration command, transmits the restoration data to another normal unit apparatus not storing the restoration data and to store the same in the memory means provided in said another normal unit apparatus.

In use of the data base system according to the present invention, even if an abnormity occurs in any one of a plurality of the unit apparatuses and a failure has occurred in information data stored in the memory within the failed unit apparatus, controlling means of a unit apparatus which has already stored restoration data (data for use in restoration) and is one of the remaining normal unit apparatuses, will read out the data from its own memory and transmit the same to and store it in other normal unit apparatus, in accordance with a predetermined redundancy. In this way, the data may be stored in a memory means of a normal unite apparatus and the predetermined redundancy can be maintained automatically. Further, since the restoration process can be effected by virtue of the controlling means provided within each unit apparatus, it is possible to establish an improved data base system capable of individually processing data, both efficiently and reasonably.

Specifically, the gateway determines the occurrence of an abnormity, in accordance with an abnormity occurrence signal transmitted from a controller provided within the abnormal unit apparatus having an abnormity. Further, the controller of the normal unit apparatus which has received the restoration command, operates to send a restoration request to each of the remaining unit apparatus, and to transmit the restoration data to a unit apparatus which has transmitted back a response signal in accordance with the restoration request.

With the use of the above constitution, the data for restoration may be stored in a unit apparatus which is among all the normal unit apparatus having received the restoration command can operate in accordance with the restoration command. In this manner, the data for restoration will not be stored in a unit apparatus busy in its other operation, but will be stored in a non-busy unit apparatus in its stand-by state. Accordingly, it is possible to greatly shorten an abnormal state, thereby providing a highly reliable data base system.

Furthermore, the controller of a normal unit apparatus which has received the restoration command, operates to specify a normal unit apparatus serving as a receiver for receiving the restoration data, the specifying process being performed in accordance with the predetermined redundancy.

According to the above constitution, the number of normal unit apparatus serving as receivers for receiving restoration data may be set in accordance with redundancies. Thus, it is possible to prevent the number of normal unit apparatus from exceeding the predetermined redundancies, making it possible to efficiently and reasonably make use of the storing capacity of memory means provided in each unit apparatus.

Moreover, the plurality of unit apparatus are detachably installed in a housing of the data base system. Therefore, an abnormal unit apparatus may be properly replaced by a normal one, and it is also allowed to increase new unit apparatus, thus making it possible to properly regulate an overall storing capacity of the data base system.

Besides, the data base system further comprises a network interface in connection with the plurality of unit apparatus and the gateway by way of communication lines. Therefore, it is possible to establish an improved network system using such a data base system by virtue of communication lines.

An information distribution system of the present invention comprises: a plurality of central management centers which are connected in a communication network for performing overall management of various large amount of information data, and can transmit back information data in accordance with requests from the downstream side of the network; a plurality of area management centers connected in the network via communication lines and located downstream of the central management centers, each area management center having an information storing system; one or more information terminal equipments connected in the network via communication lines and located downstream of the central management centers or the area management centers, each information terminal equipment being able to send a data distribution request to any one of the central management centers or the area management centers for obtaining any information data which is under the overall management of the central management centers, and also being able to receive any information data transmitted back in accordance with the data distribution request. In particular, each area management center is adapted to receive any data distribution request from the one information terminal equipment or one of the more information terminal equipments located on the downstream side, when the requested information data has already been stored in its data base system, the stored information data is transmitted towards the downstream side of the network. When the requested information data is not stored in the data base system, the data distribution request is sent to an area management center located upstream of other area management centers or to an upstream central management center, the requested information data is then received from the area management center or the central management center having the requested information data, and sent to the downstream side of the network and stored there.

With the use of the above constitution, when an information terminal equipment sends out a request for user's desired information data, the requested information data can be transmitted from a central management center to the information terminal equipment.

Moreover, when a request for user's desired information data is sent from an information terminal equipment connected through an area management center to the communication network, the requested data will be transmitted from the central management center to the information terminal equipment. However, if the requested information data has already been stored in the data base system of an area management center located upstream of the information terminal equipment, the requested information data will be sent from this area management center to the information terminal equipment.

On the other hand, if the requested data is not existing in the data base system of the above area management center, the area management center will send the same request to an upstream area management center. If the requested data is not existing even in this upstream area management center, the upstream area management center will send the same request to a further upstream area management center. Once, as a final result, the request arrives at a central management center, the requested data will be transmitted from the central management center towards the downstream side so as to arrive at the information terminal equipment which has originally sent out the request. Each area management center operates to store the information data transmitted from the central management center in its own data base system.

For this reason, various sorts of requested information data wanted by the information terminal equipments are accumulated in the respective area management centers located downstream of the central management centers . In this way, at a next time when there is the same data transmission request, the request can be sent to an area management center close to information terminal equipments, instead of being sent to a central management center. Namely, various information datas corresponding to the sorts and frequencies of transmission requests may be accumulated in the area management centers. Therefore, it is possible to perform a reasonable On-Demand data transmission.

Furthermore, when a central management center or an area management center distributes the requested information data in the downstream direction, the requested information data may be divided into a plurality of data packets to be later successively transmitted out. In this manner, each information terminal equipment is allowed to carry out any other treatment in parallel with a process of receiving one packet of information data.

On the other hand, when the requested information data is not stored in an area management center which has received any data distribution request from an information terminal equipment located on the downstream side of the network, the area management center sends the same data distribution request to another downstream area management center. When the requested information data has already been stored in said another downstream area management center, the requested information data is then sent out from said another downstream area management center and distributed in the downstream direction. Moreover, when there is a response indicating that the requested information data is not stored in said another downstream area management center, the data distribution request is then sent to an upstream area management center or to an upstream central management center.

With the use of the above constitution, an area management center not storing the requested data wanted by a data transmission request from the downstream side of the network, can make use of information data stored in other surrounding area management centers, thereby ensuring an efficient and reasonable data transmission.

In addition, each information terminal equipment is provided with a recording device for recording in an information recording medium a requested information data transmitted back from the network upstream side in accordance with the data distribution request. Therefore, it is possible to provide users with information recording mediums having recorded thereon information data transmitted hereto.

Besides, each information terminal equipment has a controller capable of selling information recording medium, transmitting accounting information concerning selling price to a central management center via an area management center, or directly transmitting the accounting information to the central management center. Accordingly, it is possible for central management centers to perform management and statistic treatment of the accounting informations when the information recording mediums have been sold.

Each data base system involved in the information distribution system of the present invention includes a plurality of unit apparatuses each containing memory means, is capable of recording data in the memory means in accordance with predetermined redundancies, said data base system comprising: a controller provided in each unit apparatus; and a gateway for communications among the controllers. When an abnormity occurs in any one of the unit apparatus, the gateway determines an abnormal unit apparatus involving the abnormity, and to send a restoration command to a controller provided in a normal unit apparatus storing the same data (restoration data) as previously stored in the abnormal unit apparatus. Meanwhile, the controller of the normal unit apparatus which has received the restoration command, transmits the restoration data to another normal unit apparatus not storing the restoration data and to store the same in the memory means provided in said another normal unit apparatus.

In use of the data base system according to the present invention, even if an abnormity occurs in any one of a plurality of the unit apparatuses and a failure has occurred in information data stored in the memory within the failed unit apparatus, controlling means of a unit apparatus which has already stored restoration data (data for use in restoration) and is one of the remaining normal unit apparatuses, will read out the data from its own memory and transmit the same to and store it in other normal unit apparatus, in accordance with a predetermined redundancy. In this way, the data may be stored in a memory means of a normal unite apparatus and the predetermined redundancy can be maintained automatically. Further, since the restoration process can be effected by virtue of the controlling means provided within each unit apparatus, it is possible to establish an improved data base system capable of individually processing data, both efficiently and reasonably.

### BRIEF DISCRIPTION OF THE ACCOMPANYING DRAWINGS

Fig. 1 is a partially exposed perspective view showing an external structure of a server unit included in a data base system formed according to a first embodiment of the present invention.
Fig. 2 is a block diagram showing an internal constitution of the server unit.
Fig. 3 is a perspective view showing an external structure of the data base system.
Fig. 4 is a block diagram showing the constitution of the data base system.
Fig. 5 is a flow chart showing an operation of the data base system when in its data storing process.
Fig. 6 is a flow chart showing an operation of the data base system when in its data reading-out process.
Fig. 7 is a flow chart showing an operation of the data base system when in its error treatment process.
Fig. 8 is an explanatory view schematically showing a data storing process, corresponding to the flow chart shown in Fig. 5.
Fig. 9 is an explanatory view schematically showing a data reading-out process, corresponding to the flow chart shown in Fig. 6.
Fig. 10 is an explanatory view schematically showing an error treatment process, corresponding to the flow chart shown in Fig. 7.
Fig. 11 is an explanatory view showing another error treatment process, corresponding to the flow chart shown in Fig. 7.
Fig. 12 is an explanatory view showing a further error treatment process, corresponding to the flow chart shown in Fig. 7.
Fig. 13 is a block diagram showing a conventional RAID system.
Fig. 14 is an explanatory view showing an operation of the conventional RAID system.
Fig. 15 is a block diagram showing the constitution of an information distribution system formed according to a second embodiment of the present invention.
Fig. 16 is a block diagram showing the constitution of a center server.
Fig. 17 is a block diagram showing the constitution of a cache server.
Fig. 18 is a block diagram showing the constitution of an information terminal equipment.
Fig. 19 is a flow chart showing an operation of the information distribution system of the present invention.
Fig. 20 is a flow chart showing another operation of the information distribution system of the present invention.
Fig. 21 is an explanatory view showing an advantage provided by the information distribution system of the present invention.
Fig. 22 is an explanatory view showing another information distribution method associated with the information distribution system of the present invention.
Fig. 23 shows the contents of a stack memory.
Fig. 24 is a block diagram showing a further data distribution method associated with the information distribution system of the. present invention.
Fig. 25 is a view showing a data distribution method effective among a plurality of central management centers.
Fig. 26 is a view showing a further data distribution method effective among a plurality of central management centers.
Fig. 27 is an explanatory view showing an advantage provided by the information distribution system of the present invention.

### BEST MODLES FOR CARRYING OUT THE INVENTION

The best models for carrying out the present invention will be described in the following with reference to the accompanying drawings.

### (First Embodiment)

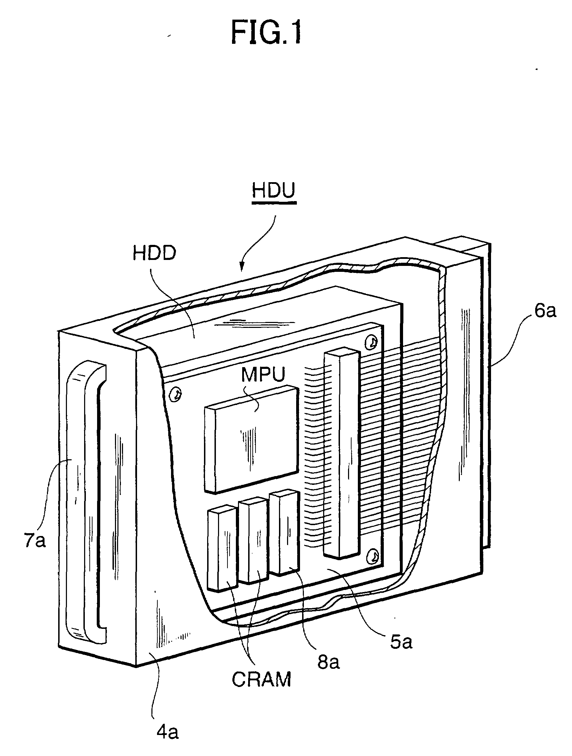

Figs. 1 - 12 are used to describe the first embodiment of the present invention, using an example which is the data base system equipped with hard discs, suitable for use as a data base server ora file server. Here, although the data base system of the present embodiment is suitable for use in a computer network system such as a small-scale LAN or WAN, this system can also be used in an information distribution system (which will be described in detail later), thereby making it possible to establish an improved information distribution system having an improved fault tolerant property and thus an improved reliability.

Fig. 1 is a partially exposed perspective view showing an external structure of a unit apparatus HDU (hereinafter referred to as server unit), serving as one of a plurality of essential elements forming the data base system DSYS of the present invention.

As shown in Fig. 1, the server unit HDU has a housing 4a, an external connector 6a provided on the back side of the housing 4a, a handle 7a provided on the front side of the housing 4a. The housing 4a encloses a hard disc HDD serving as a memory device and a controller 5a formed on an electric circuit board.

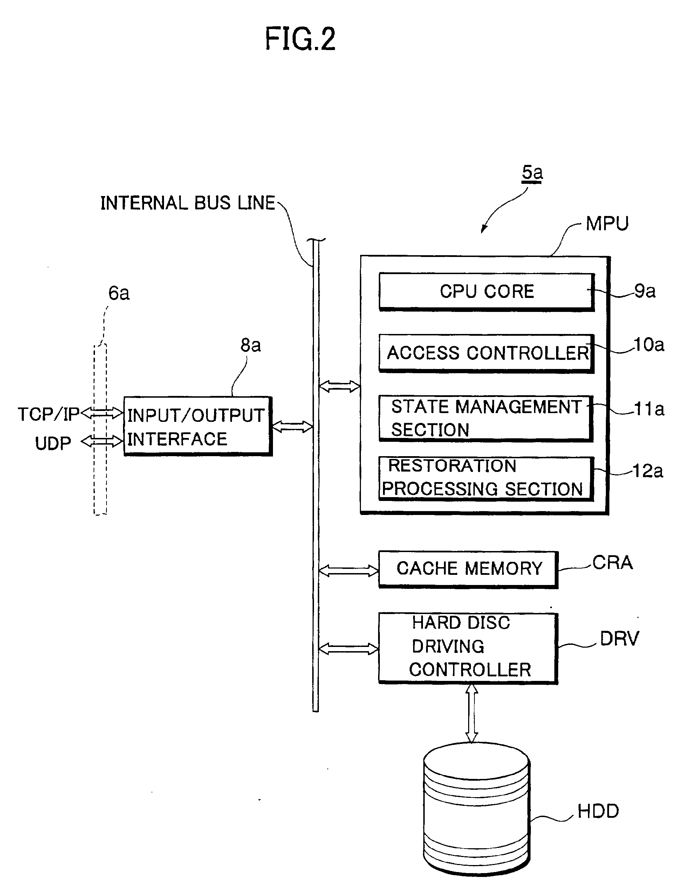

As shown in Fig. 2 which is a block diagram, the controller 5a comprises a micro-processor MPU, a cache memory CRA, a hard disc driving controller DRV and an input/output interface 8a, all connected with internal bus lines. The input/output interface 8a is connected with the external connector 6a.

When data for storage is supplied from outside through the external connector 6a, the input/output interface 8a (which is under the control of the micro-processor MPU) will operate to input the data. Then, the hard disc driving controller DRV can operate to store the data in the hard disc HDD.

On the other hand, when there is a data reading-out request transmitted from outside via the external connector 6a, the hard disc driving controller DRV (which is also under control of the micro-computer MPU) reads the requested data from the hard disc HDD and then transmits the data to the external connector 6a via the input/output interface 8a.

The micro-processor MPU, as shown in Fig. 2, is a semiconductor integrated circuit device comprising a CPU core 9a (provided for operation and control), an access controller 10a, a state management section 11a, a restoration processing section 12a. Specifically, the access controller 10a, the state management section 11a and the restoration processing section 12a are formed by firm ware or hard ware.

The state management section 11a is provided to monitor the operation of the entire server unit HDU and to detect whether there is something abnormal in the server unit.

The access controller 10a is provided to receive a data storing request or a data reading-out request through the external connector 6a, and to issue a data storing command or a data reading-out command to the hard disc driving controller DRV. Meanwhile, information data indicating the operation of the entire server unit HDU and showing whether there is something abnormal in the server unit (detected by the state management section 11a), is also fed to the external connector 6a.

The restoration processing section 12a, which will be described in detail later, is provided to restore something abnormal occurred in the data base system DSYS of the present embodiment.

The CPU core 9a is provided to carry out a centralized control of the access controller 10a, the state management section 11a, and the restoration processing section 12a.

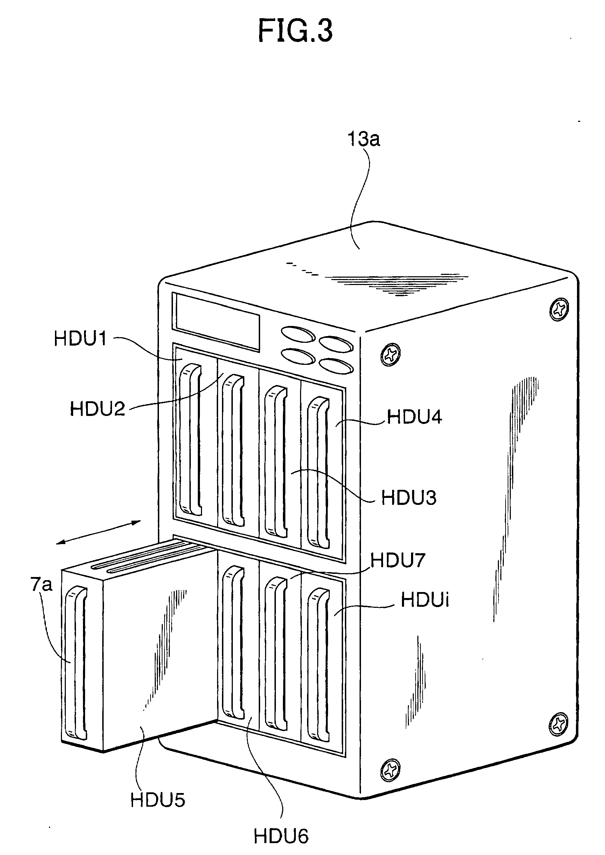

Fig. 3 is a perspective view showing an external structure of the data base system DSYS of the present embodiment. As shown in the drawing, the housing 13a of the data base system DSYS has a plurality of slots (not shown) capable of detachably receiving a plurality of server units HDU1 - HDUi shown in Figs. 1 and 2.

Within the housing 13a is provided an electric power device (not shown) for supplying an electric power to the plurality of server units HDU1 - HDUi. The housing 13a also encloses a HUB 14a (serving as a network interface) and a gateway GW.

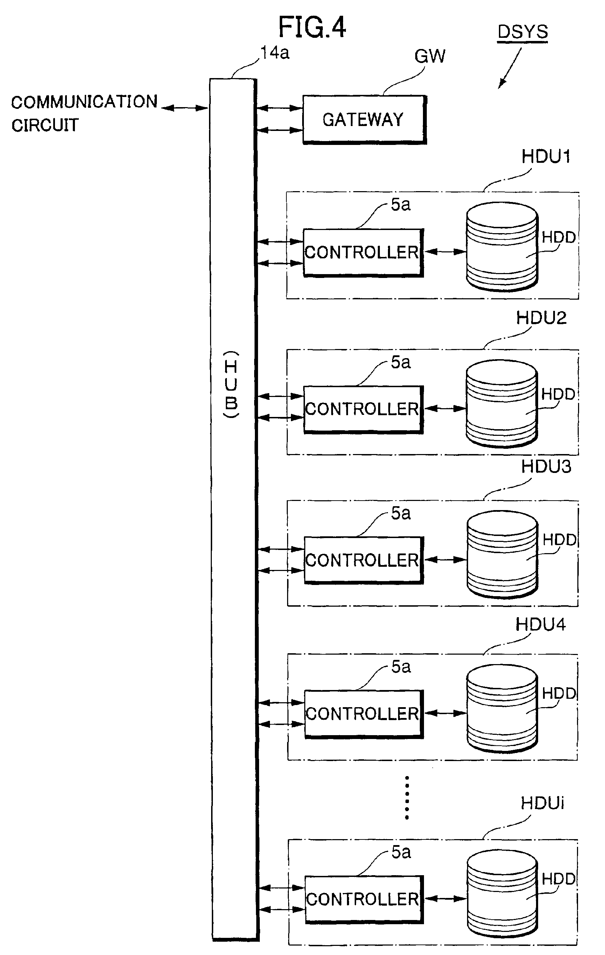

When a handle 7a of any server unit (for example, HDU5) is pulled outwardly, this server unit may be removed from the housing 13a. On the other hand, when a server unit is inserted into any slot, this server unit can be installed into the housing 13a. At this time, the external connector 6a provided on this server unit can be connected with the HUB 14a. Namely, as shown in Fig. 4 (which is a block diagram), the data base system DSYS of the present embodiment is so formed that the gateway GW is connected with the HUB 14a and that the plurality of server units HDU1 - HDUi are detachably installed in and in connection with the data base system.

Here, the HUB 14a is connected with a communication line and handled by TCP/IP (Transmission Control Protcol/internet Protcol) and UDP (User Datagram Protcol) which are two protcols provided for transmitting data in IP packet.

In this way, since the data base system DSYS of the present embodiment is so formed that a plurality of server units HDU1 - HDUi can be detachably installed in the hosing 13a, any failed server unit can be easily replaced by a good one without bringing about any undesired influence to other server units. Further, it is also possible to easily increase the number of server units so as to increase the data storing capacity.

Gateway GW is provided to receive via the HUB 14a data storing requests and data reading-out requests from the communication line, and transmit these requests to the controllers 5a provided within the server units HDU1 - HDUi, thereby storing data into or reading data from the server units.

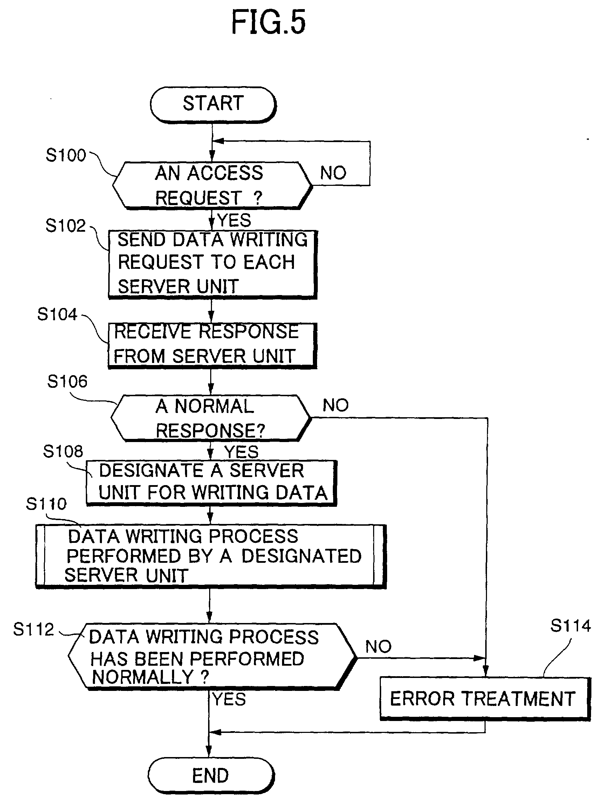

Figs. 5 - 12 are used to describe an operation of the data base system of the present embodiment having a structure shown in Figs. 1 - 4.

Fig. 5 is a flow chart showing a data storing process. At step S100, when there is a data storing access request received via the HUB 14a from the communication line, such a request is received by the gateway GW. For example, if the communication line is connected with user terminal equipments or other servers and if there is a data storing request transmitted from a terminal equipment or a user server, such a request will be received by the gateway GW.

Here, the gateway GW is provided to receive only an access request prescribed in and allowed by a UDP protcol.

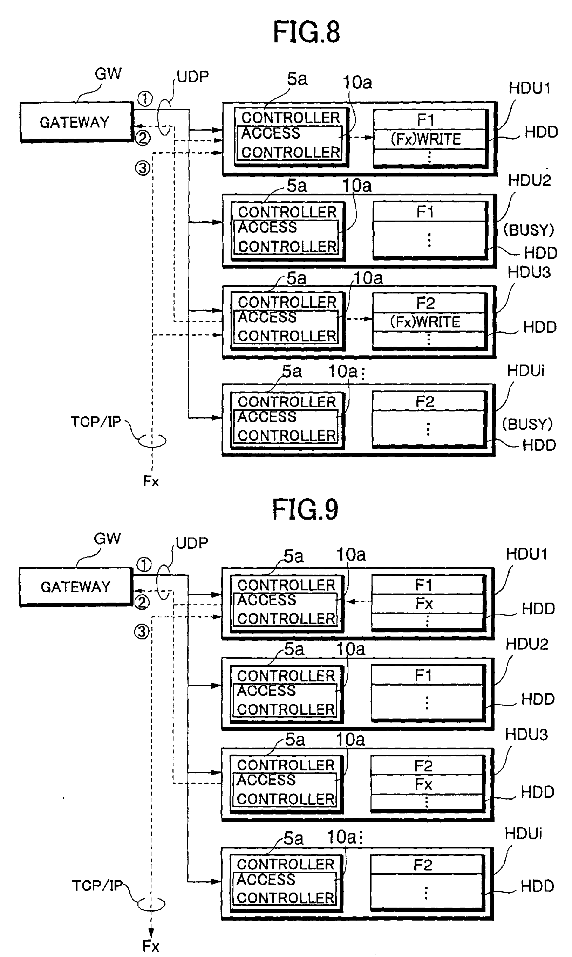

At step S102, the gateway GW, upon receiving an access request, issues a data writing command via the HUB 14a to the server units HDU1 - HDUi. Namely, the gateway GW issues a data writing command in accordance with the UDP protcol, in a manner indicated by a solid line ① shown in Fig. 8.

In this way, the access controller 10a provided in each of the server units HDU1 ― HDUi receives a data writing request from the gateway GW. At this time, each state management section 11a operates to investigate present operation state of each of the server units HDU1 - HDUi. Afterwards, an access controller 10a of each server unit in a stand-by state operates to send back a response signal (indicating that the requested data writing is possible) to the gateway GW.

For example, as shown in Fig. 8, if the server units HDU2 and HDUi are in operation, the access controllers 10a provided within the server units HDU2 and HDUi will not send back the response signals. Only the access controllers 10a provided within the server units HDU1 and HDU3 not in operation will send back the response signals to the gateway GW, in a manner as shown by a broken line ② in Fig. 8. However, these response signals are all sent back in accordance with the UPD protcol.

At step S104 of Fig. 5, the response signals sent back are all received by the gateway GW. Then, at step S106, it is determined whether or not the response signals have been received in a normal way. If a result is YES indicating that the response signals have been received in a normal way, the program goes to step S108. On the other hand, if a result is NO indicating that the response signals have not been received in a normal way, the program goes to step S114 so as to start an error treatment.

At step S108, the gateway GW operates to determine m (an integral number) server units (which have sent back the response signals earlier than other server units) in accordance with a predetermined redundancy m, thereby determining these m server units can be used as server units for writing data. Then, data writing commands are issued to these m server units, in accordance with TCP/IP protcol.

For example, when the data base system DSYS of the present invention is set at a redundancy m=2, if the server units HDU1 and HDU3 (shown in Fig. 8) have sent back response signals earlier than other server units, the gateway GW will send data writing commands to the server units HDU1 and HDU3.

Subsequently, at the step S110, the server units HDU1 and HDU3 (which have received data writing commands) further receive data Fx transmitted via HUB 14a from the communication line in accordance with TCP/IP protcol, and store the data Fx in the hard discs HDD provided within the server units HDU1 and HDU3.

Namely, the data Fx is stored in the hard discs HDD of the server units HDU1 and HDU3, in a manner indicated by a dashed line ③ shown in Fig. 8.

Once the data Fx has been stored in the above hard discs HDD, response signals indicating the completion of the data writing will be outputted from the respective controllers 5a provided within the server units HDU1 and HDU3, and received by the gateway GW.

Then, at step S112, it is determined whether the gateway GW has received the response signals indicating the completion of the data writing and whether the data writing process has been completed in a normal way. If a result is Yes indicating that the data writing process has been completed in a normal way, the data storing process is terminated, while a transmission process is carried out for sending a notice indicating the completion of the data writing to the client and other servers. On the other hand, If a result is NOT indicating that the data writing process has not been completed in a normal way, the program goes to step S114 so as to start an error treatment process. The error treatment at step S114 will be described in detail later in the present specification.

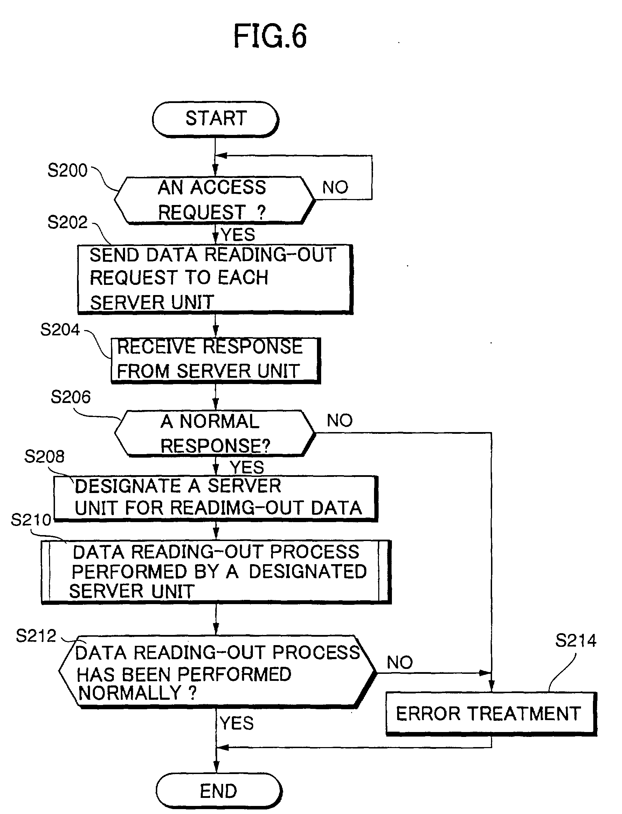

Next, a data reading process will be described with reference to a flow chart shown in Fig. 6. At step S200, if there is an access request for reading out a desired data (for example, data Fx which has already been stored) and such a request is received via the HUB 14a from the communication line, the access request will be received by the gateway GW. For example, when there is a data reading-out request from the above client or other servers, such an access request will be received by the gateway GW.

Here, the gateway GW is provided to receive only an access request prescribed in and allowed in a UDP protcol.

Subsequently, at step S202, the gateway GW (which has already received the data reading-out access request ) issues data reading-out requests to the server units HDU1 - HDUi. For example, when there is a request for reading out data Fx, the request is fed to the server units HDU1 - HDUi. At this time, the gateway GW issues the data reading request, in a manner indicated by a solid line ① shown in Fig. 9.

In this manner, the access controllers 10a of the server units HDU1 - HDUi will receive data reading requests from the gateway GW. Then, the access controllers 10a of the server units (for example HDU1 and HDU3) which have already stored the data Fx, will send back response signals to the gateway GW. Namely, the response signals are sent back in accordance with the UDP protcol, in a manner indicated by a broken line ② shown in Fig. 9.

In this way, at step S204 shown in Fig. 6, the gateway GW receives the response signals. Then, at step S206, it is determined whether or not the response signals have been received in a normal way. If a result is YES indicating that the response signals have been received in a normal way, the program goes to step S208. On the other hand, if a result is NO indicating that the response signals have not been received in a normal way, the program goes to step S214 so as to start an error treatment.

At step S208, the gateway GW operates to determine a quickest server unit (for example, the server unit HDU1 which sent back a response signal earlier than any other server units). The quickest server unit is then used for data reading-out.

Thus, a data reading-out command is issued to the server unit in accordance with TCP/IP protcol.

Afterwards, at step S210, the server unit (for example, sever unit HDU1 which has received the data reading-out command) operates to transmit data Fx via the HUB 14a to the communication line, in accordance with TCP/IP protcol. Namely, in a manner indicated by a dashed line ③ shown in Fig. 9, the data Fx stored in the hard disc HDD of the server unit HDU1 is transmitted to the communication line, in accordance with the TCP/IP protcol.

Once the reading-out and transmitting of the data Fx is completed, a response signal indicating the completion of the data reading-out is outputted from the controller 5a of the server unit HDU1, so that the response signal is received by the gateway GW.

Thus, at step S212, the gateway GW receives the response signal indicating the completion of the data reading-out, and it is determined whether or not the data reading-out process has been completed in a normal way. If a result is YES indicating that the data reading-out process has been completed in a normal way, the data reading-out process is terminated, and a notice indicating the completion of the data reading-out is issued to the client and other server units. On the other hand, If a result is NO indicating that the data reading-out process has not been completed in a normal way, the program goes to step S214 so as to start an error treatment (which will be described later in the present specification).

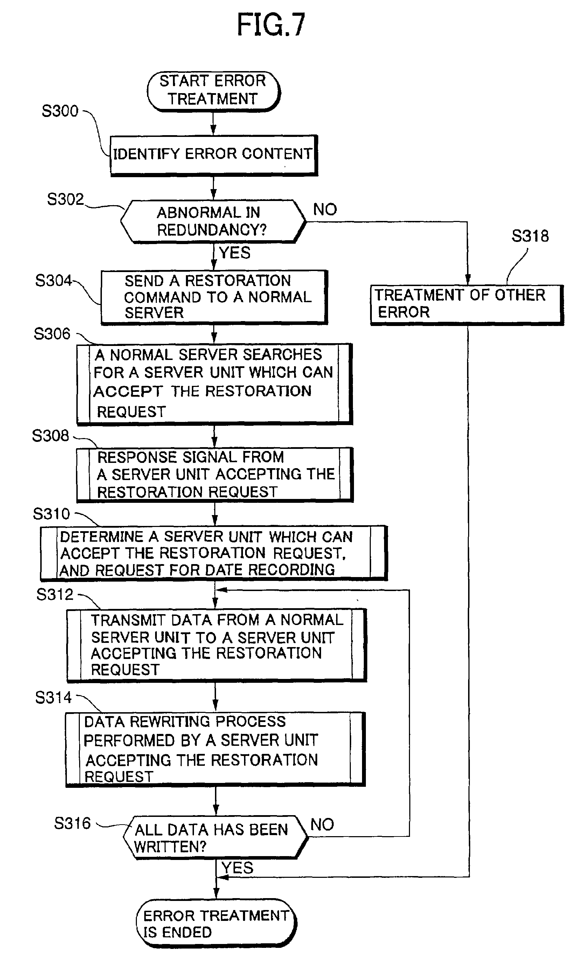

Fig. 7 is a flow chart which can be used to explain the error treatment carried out at the above step S114 and the above step S214.

Referring to Fig. 7, at step S300, the gateway GW operates to identify the content of an error. In particular, the content of an error can be identified by the gateway GW which investigates a response signal sent back from any one of the server units HDU1 - HDUi to the gateway GW, at a time of data recording shown in Fig. 5 or a time of data reading shown in Fig. 6.

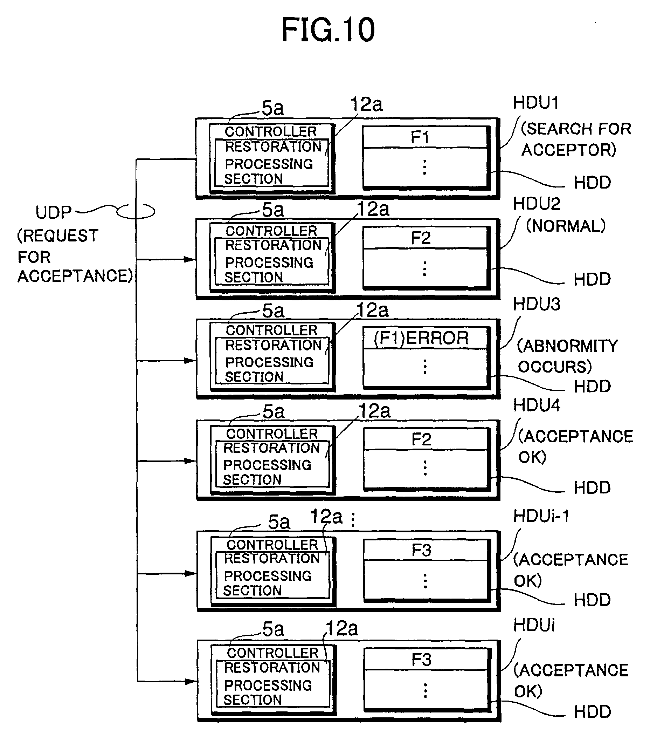

Then, at step S302, the gateway GW operates to determine whether or not the identification result is an abnormal one in relation to a redundancy. Namely, although the redundancym is set in advance, if the same identical data has not been stored in m server units (for example, an error occurs in data F1 of the server unit HDU3 shown in Fig. 10), it can be determined that an error has occurred in relation to the redundancy. If it is determined that an error has occurred in relation to the redundancy (a result is YES), the program goes to step S304. On the other hand, if it is determined that an error has not occurred in relation to the redundancy (a result is NO), the program goes to step S318 to start another error treatment for treating other errors.

At step S304, the gateway GW operates to issue a restoration command to other server units which themselves are in normal operation but are related to a redundancy abnormity (for example, the server unit HDU1 which itself is in normal operation but is related to a redundancy abnormity of the server unit HDU3) . Further, when the gateway GW issues such a restoration command, redundancy data set in advance in the data base system DSYS of the present embodiment will also be transmitted along with the restoration command.

In this way, the restoration processing section 12a of a normal server unit (which is in normal operation, for example, the server unit HDU1) can receive the restoration command.

Then, at the step S306, the restoration processing section 12a of the server unit (which has received the above restoration command) will issue a restoration request to each of the remaining server units, in accordance with UDP protcol.

For example, as shown in Fig. 10, when the server unit HDU1 has been designated by the gateway GW, the restoration processing section 12a of the server unit HDU1 will operate to issue restoration requests to the remaining server units HDU2 - HDUi so as to search for a server unit capable of accepting the restoration request.

Therefore, at step S308, the restoration processing sections 12a of the server units HDU2 - HDUi can receive the restoration requests. In this way, one of the server units HDU2 - HDUi, which is capable of accepting the restoration request, will send back a response signal (indicating the capability of accepting the restoration request) to the server unit HDU1.

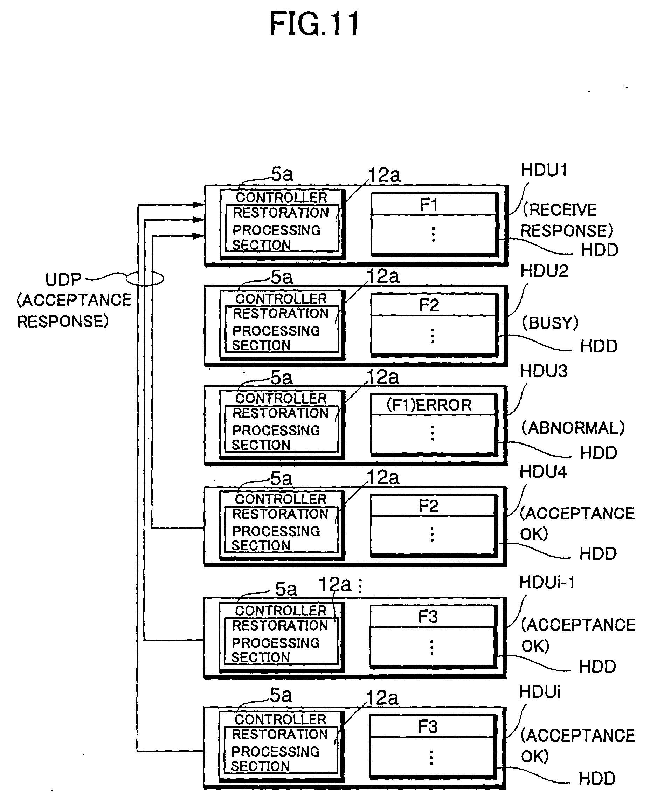

For example, as shown in Fig. 11, in the case where the server unit HDU2 is in operation (busy) and the server unit HDU3 is related to a redundancy abnormity while the remaining server units HDU4 - HDUi are in normal and stand-by condition, response signals indicating an acceptance for receiving restoration request will be sent back from the server units HDU4 - HDUi to the server unit HDU1. At this time, the response signals are sent back in accordance with the UDP protcol.

Thus, at step S310 shown in Fig. 7, the server unit HDU1 receives the response signals and specifies (m - 1) server units which have sent back the above response signals earlier than any other server units. The specified server units are then designated to be those capable of accepting the restoration requests, so that request commands for data storing (data writing) are issued to these server units.

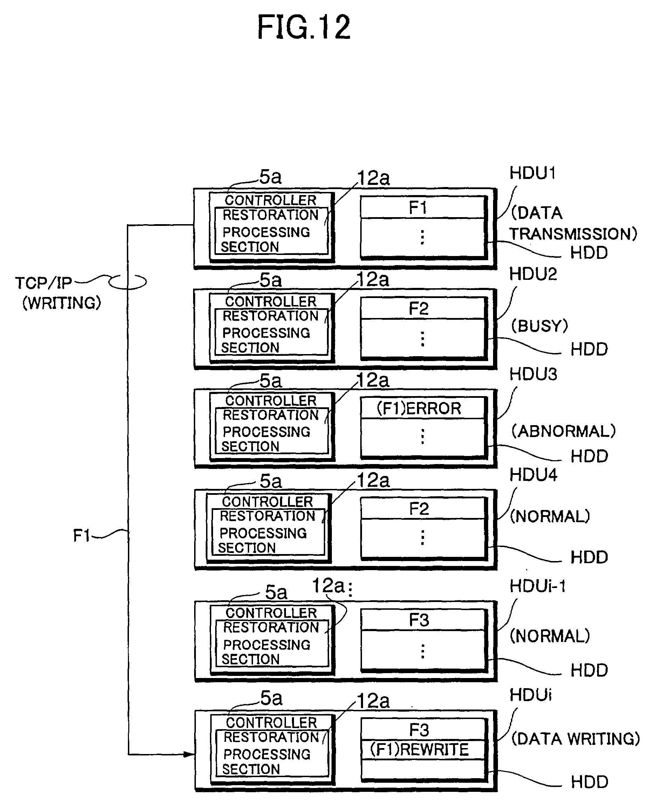

For example, referring to Fig. 12, in the case when the redundancy has been set to be m=2 and when a server unit HDUi has been designated for accepting a restoration request, a data storing request is issued from the restoration processing section 12a of the server unit HDU1 to the restoration processing section 12a of the server unit HDUi. However, such a data storing request is issued in accordance with TCP/IP protcol.

Thus, at step S312 shown in Fig. 7, the server unit HDU1 transmits a restoration data (for example F1) to the server unit HDUi . However, such restoration data (for example F1) is transmitted in accordance with TCP/IP protcol.

Therefore, at step S314, the server unit HDUi receives the restoration data (for example, F1), and store the data in the hard disc HDD contained in the server unit HDUi.

Then, the server unit HDU1 (serving as a sender for sending data F1) transmits all the restoration data, while the operations at steps S312 and S314 are repeated until the completion of the data writing process performed in the server unit HDUi, thereby finishing the error treatment.

Accordingly, when the redundancy is set to be m=2 and a certain data F1 is stored in both the server units HDU1 and HDU3, and when an abnormity occurs in the server unit HDU3 and thus the data F1 becomes unreadable, the server unit HDU1 (not having any abnormity) will automatically search for a server unit HDUi capable of accepting the restoration request, and then transmits the data F1 to and store the same in the server unit HDUi, thereby maintaining a state in which the redundancy m is 2.

Therefore, with the use of the data base system DSYS of the present invention, it is not necessary for a system manager to replace an abnormal server unit (for example, the server unit HDU3 which has had an abnormity) with a new server unit. In this way, it is possible to automatically perform a restoration process to maintain a predetermined redundancy m, thereby making it possible to provide an improved data base system having an improved fault tolerant property and thus an improved reliability.

Further, since it is possible to automatically perform the above-described restoration process, the data base system as a whole can keep its normal operation continuously without having to remove an abnormal server unit from the system. In this way, an abnormal server unit is allowed to be replaced by a new one at a later time after the occurrence of an abnormity, thus making it easy to perform daily maintenance of the data base system.

Furthermore, the above-described restoration process can be automatically performed among the controllers 5a provided within the respective server units HDU1 - HDUi. Namely, the controller of a normal server unit (for example, the server unit HDU1) serves as a main actor which can inquire the controllers of other server units (for example, remaining server units HDU2 - HDUi) so as to search for an appropriate server unit capable of accepting a restoration request, thereby storing certain data in the searched server unit and thus constantly maintaining a predetermined redundancy m. For this reason, since the restoration treatment can be carried out by independently treating individual server units HDU1 ― HDUi, it is possible to provide an improved data base system having a higher operational flexibility.

Although it has been described in the above embodiment that the redundancy m is 2, this should not form a limitation to the present invention. In fact, the redundancy m may be set to any optional value.

Further, the data base system DSYS of the present invention is suitable for use not only in a network system, but also in a recording/reproducing system for recording/reproducing contents data such as video data and audio data, thus exhibiting an excellent universality.

For example, the data base system of the present invention can be used to replace a conventional VTR (Video Tape Recorder) in which a magnetic tape is used as an information recording medium, thereby serving as an information recording/reproducing system for recording video data or audio data transmitted from digital television broadcast.

### (Second Embodiment)

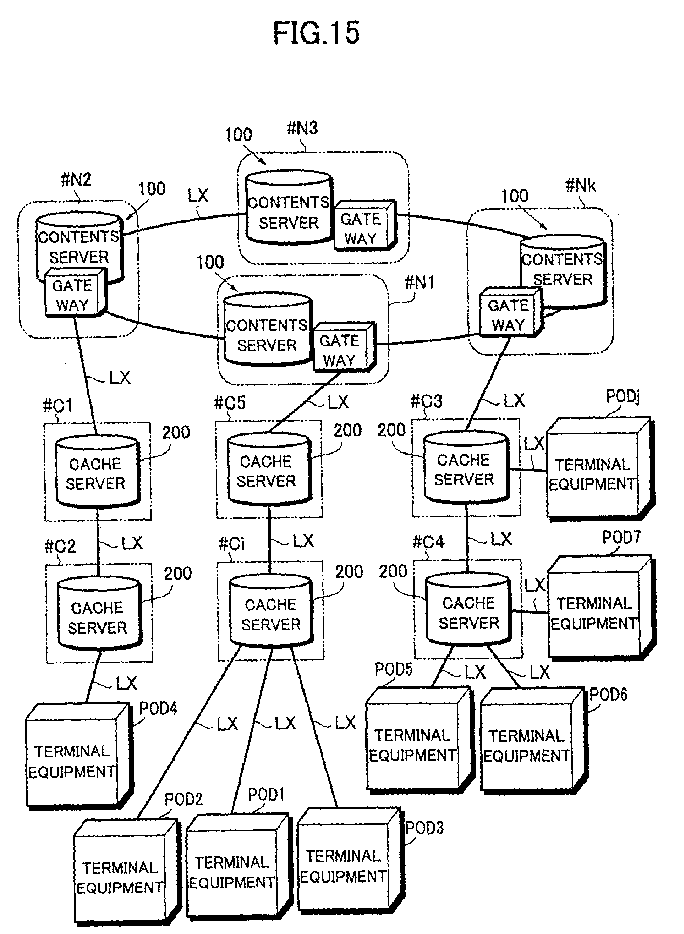

A second embodiment of the present invention will be described with reference to Figs. 15 - 27. In fact, the second embodiment relates to an information distribution system using the data base system formed according to the above-described first embodiment.

Fig. 15 is a block diagram showing the constitution of the information distribution system formed according to the second embodiment.

Referring to Fig. 15, the information distribution system comprises a plurality of (at least two) central management centers # N1 ― #Nk located at the uppermost positions, a plurality of (at least two) area management centers # C1 ― #Ci located at the middle positions, a plurality of (at least two) information terminal equipments POD1 - PODj located at the lowermost positions. Each of the central management centers # N1 - #Nk contains a contents server and a gateway. These central management centers are independently distributed and connected on LAN by virtue of communication lines Lx.

Further, each of the central management centers # N1 ― #Nk is located in a building of an information distribution company providing information to one or more areas. In fact, each central management center has a center server 100 serving as central distribution apparatus.

The detailed constitution of each center server 100 will be later described with reference to Fig . 16. Inpractice, each center server 100 is equipped with a contents server for storing contents data for distribution. Each gateway provided in each of the central management centers # N1 - #Nk shown in Fig. 15 is provided to manage the input/output of the contents data into/from a corresponding contents server.

In the contents servers of the central management centers # N1 ― #Nk, the same identical contents datas are stored repeatedly in accordancewith a predetermined redundancy. For example, when a redundancy m is 2, a certain contents data will be stored in both the contents server of the central management center #N1 and the contents server of the central management center #Nk.

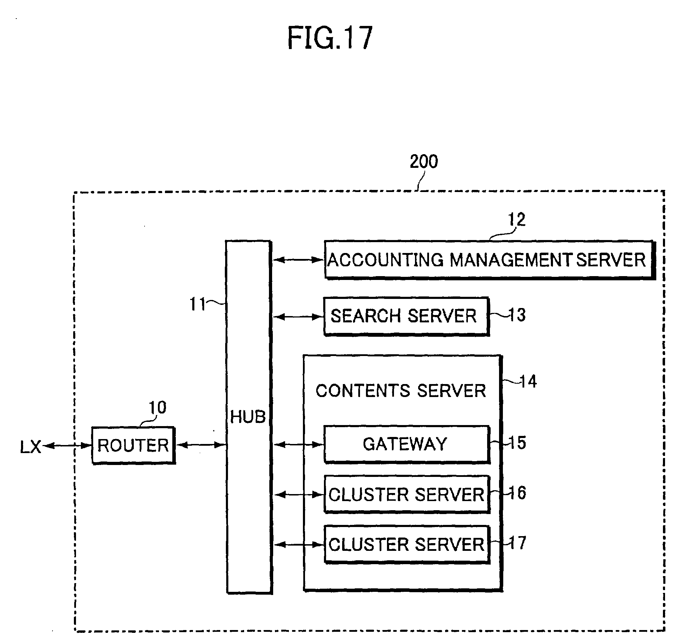

The area management centers # C1 - #Ci are distributed in a plurality of areas, each containing a cache server 200 serving as a relay distribution apparatus in a building of each area, as shown in Fig. 17.

The center servers 100 of the center management centers # N1 - #Nk and the cache servers 200 of the area management centers #C1 - #Ci are connected via communication lines LX in the network in a tree-like and/or a star-like manner(s).

In the present embodiment, the communication lines LX may be commercial communication lines consisting of optical fiber. However, the communication lines LX may also be commercial communication lines consisting of coaxial cable.

The information terminal equipments POD1 - PODj may be considered to be equivalent to client terminal equipments, and are usually located in corners of shops and commercial streets, in a manner such that users can use the information distribution system in a dialogue form.

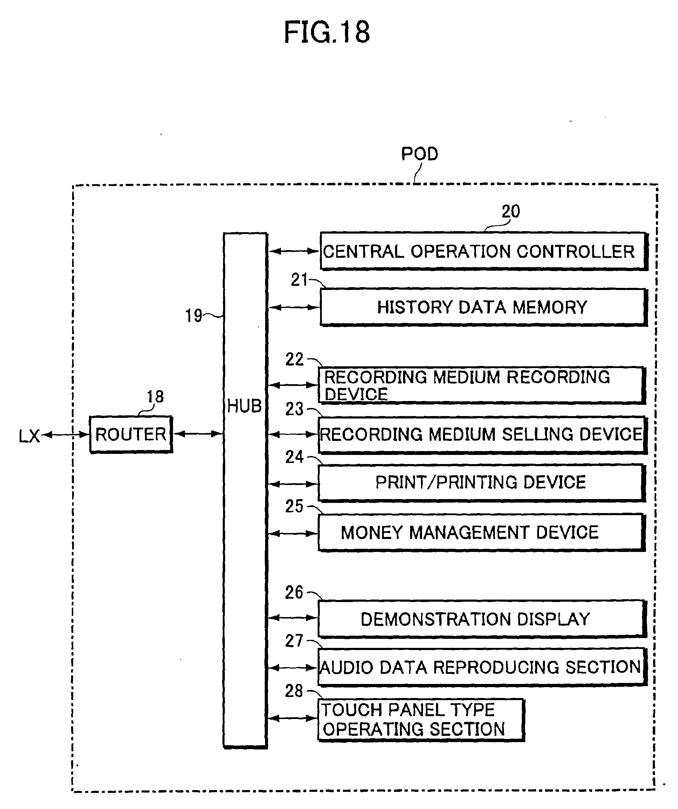

In fact, each of the information terminal equipments POD1 - PODj has a constitution shown in Fig. 18 and has an outer appearance similar to an operating panel which allows a user to directly operate to select his or her desired song. Further, the information terminal equipments POD1 - PODj are directly connected to the central management centers # N1 - #Nk through commercial communication lines consisting of optical fiber or commercial communication lines consisting of coaxial cable. Alternatively, the information terminal equipments POD1 - PODj are network connected to the cache servers 200 serving as relay distribution apparatus provided within the area management centers #C1 - #Ci.

Here, the central management centers #N1 - #Nk, and the area management centers #C1 - #Ci are all called Network Operation Centers (NOC), while the information terminal equipments POD1 - PODj are called POD.

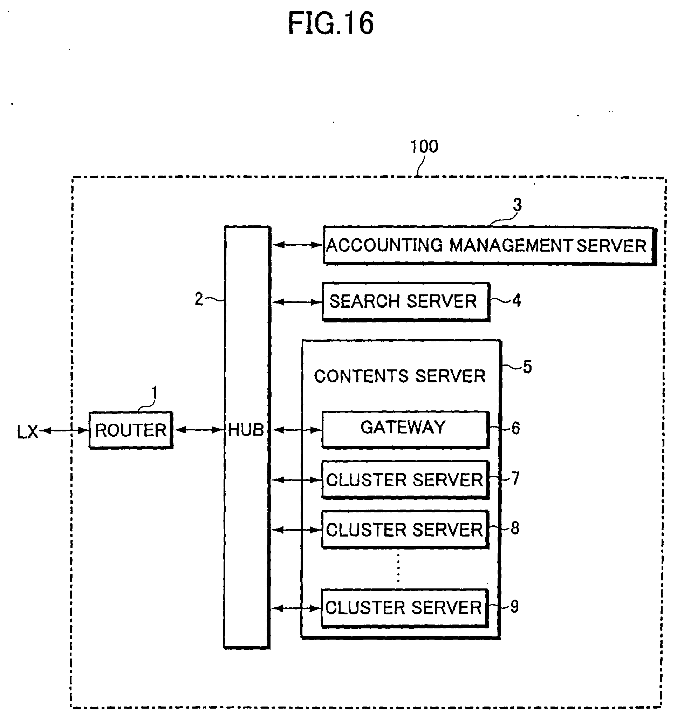

Next, Figs. 16 - 18 are used to describe each center server 100 and each cache server 200, as well as each information terminal equipment POD.

Referring to Fig. 16, each center server 100 provided within each of the central management centers #N1 - #Nk comprises a router 1 and a HUB 2, (serving as network interfaces for connection with the communication lines LX), an account management server 3, a search server 4 and a contents server 5. The contents server 5 comprises a gateway 6, a plurality of cluster servers 7 - 9.

Here, each contents server 5 is one shown in Fig. 15. The gateway 6 is provided to manage the contents server 5 and is different from each gateway shown in Fig. 15. Namely, in the present embodiment, each gateway shown in Fig. 15 is used to manage the input/output of an entire center server, while the gateway 6 shown in Fig. 16 is used to manage only the contents server 5 (shown in Fig. 16).

However, if the gateway shown in Fig. 15 is allowed to also have the function of the gateway 6, the gateway 6 shown in Fig. 16 can be omitted.

The account management server 3 is a data base server formed by the data base system DSYS according to the first embodiment.

When an account data is transmitted hereto via a communication line LX from a cache server 200 within an area management center or from an information terminal equipment POD (both of which are located on the downstream side of the network), the account data will be stored in a corresponding server unit of the above data base system DSYS. In this way, a number of account data may be accumulated in the data base system. Further, since the data base system DSYS enables the same identical account data to be stored in a plurality of server units HDU in accordance with a predetermined redundancy, and has a failure restoration function, the account management server 3 becomes an extremely highly reliable system.

The search server 4 has functions of both a data base server and network server, and is formed by the data base system DSYS formed according to the above-described first embodiment.

In fact, the song title data of the songs to be distributed in the present information distribution system, as well as artist data and variety data corresponding to the song titles, are stored as search datas in the data base system DSYS provided within the search server 4. The search datas are under management in accordance with a predetermined search algorithm.

Then, in accordance with search requests fed from the cache servers 200 of the area management centers or from the information terminal equipments POD (which are all located on the downstream side of the network) , various search datas stored in the data base systems DSYS can be searched. Then, the searched datas are sent back.

Furthermore, since the data base system DSYS enables the same identical account data to be stored in a plurality of server units HDU in accordance with a predetermined redundancy, and has a failure restoration function, the search server 3 becomes an extremely highly reliable system.

In this way, the contents server 5 is a computer system including the above gateway 6 and a plurality of cluster servers 7 - 9. Here, each of the cluster servers 7 - 9 is formed by a data base system DSYS formed according to the first embodiment. Further, each of the data base systems DSYS provided within the cluster servers 7 - 9 has stored a large amount of contents data such as music data (compressed in accordance with the audio compression system AC3 or MPEG-2) to be distributed by the present information distribution system.

When a user has a request for music data distribution in order to obtain his or her desired song through an information terminal equipment POD, a title information of the requested song is fed to the gateway 6. Then, the gateway 6 sends a request (for obtaining music data corresponding to the requested song) to each of the cluster servers 7 - 9, so as to rend any one of the cluster servers 7 - 9 storing the requested data to send out the requested music data via a communication line LX in a downstream direction.

However, the requested music data is not sent out all at one time, but is divided into several packets each having a predetermined length, so that the data may be repeatedly sent out in any optional number of times. Moreover, the music data may be at first encrypted and then sent out, while at the same time decoding data (for decoding the encrypted music data) are also sent from the contents server 5 in the downstream direction.

Further, each of the cluster servers 7 - 9 has stored not only music data, but also artist profile data related to each song, as well as image data for demonstration, so that the profile data and image data can also be sent in the downstream direction in accordance with a request from an information terminal equipment. The three cluster servers 7 - 9 shown in the block diagram is only an example, and it is possible to increase the number of the clusters, corresponding to a data amount to be stored.

In this way, since the contents server 5 comprises the data base system DSYS formed according to the first embodiment, it is allowed to form a system having an extremely high reliability.

In the present embodiment, since the center servers 100 are provided within the central management centers #N1 - #Nk in a manner shown in Fig. 15, even if there is an abnormity such as a failure occurring in any one of the center servers 100, various datas can still be transmitted to and stored in the account severs 3 and search servers 4 as well as contents servers 5 of all the normal center servers under the management of the gateways (shown in Fig. 15), thus making it possible to perform an automatic restoration at a certain redundancy. Namely, the central management centers #N1 - #Nk are so formed that not only is it possible to perform a failure restoration in the data base system DSYS provided in each center server 100, but also possible to perform a failure restoration among all the center servers 100 of the central management centers #N1 - #Nk.

Next, Fig. 17 is used to describe the constitution of a cache server 200 provided within each of the area management centers #C1 - #Ci.

In fact, each cache server 200 has substantially the same constitution as that of the center server 100 shown in Fig. 16. Namely, each cache server 200 comprises a router 10 and a HUB 11 (serving as network interface for connection with the communication lines LX), an account management server 12, a search server 13 and a contents server 14. The contents server 14 comprises a gateway 15, a plurality of cluster servers 16 and 17.

However, each cache server 200 is smaller in its scale than each center server 100, because of a fact that it has fewer cluster servers than a center server.

Here, the counter management server 12 is a data base system DSYS formed according to the first embodiment of the present invention, thereby ensuring an improved fault tolerant property.

In this way, when an account data is transmitted via a communication line LX from a cache server 200 of an area management center or from an information terminal equipment POD, each account data may be accumulated in the hard disc of a corresponding data base system DSYS, thereby effecting an account data statistic treatment. Further, a statistic result is periodically transmitted to the account management server 3 provided in a center server 100 of a central management center which is closer to the sender than any other central management centers #N1 - #Nk in the network. Namely, the account management server 12 of each cache server 200 operates to per form a management and a statistictreatment of the account data transmitted from any of the information terminal equipments POD located on the downstream side of the network. In this way, the account data may be periodically transmitted to the account management server 3 provided in a center server 100 of a central management center which is closer (to the sender) than any other central management centers #N1 - #Nk in the network.

The search server 13 has a function as data base as well as a function as a network server, and is comprised of a data base system DSYS formed according to the above-described first embodiment.

The data base system DSYS provided within each search server 13 is used to store, as search data, some title datas of the songs which will later be distributed to the downstream cache servers 200 or the information terminal equipments POD, also to store various item datas such as the names of artists and the categories of the songs. These search datas are under a management in accordance with a predetermined search algorithm.

In fact, the search server 4 within each center server 100 will operate to store search data relating to a large amount of music data (to be distributed by the information distribution system of the present embodiment), while the search server 13 within each cache server 200 will operate to store only the search data relating to music data wanted by a request transmitted from a downstream cache server 200 or a downstream information terminal equipment POD.

For example, the cache server 200 located within an area management center #Ci (shown in Fig. 15) will operate to store only the search data relating to music data wanted by requests transmitted from the downstream side information terminal equipments POD1, POD2 and POD3.

The search server 13 of the cache server 200 located within the area management center #C3 (shown in Fig. 15), will operate to store the search data relating to music data wanted by requests transmitted via the area management center #C4 from the downstream side information terminal equipments PODS, POD6 and POD7, also to store the search data relating to music data wanted by a request transmitted from the downstream information terminal equipment PODj.

Later in the present specification, a description will be given to explain the principle and operation for the search data to be stored in the search server 13 of the cache server 200.

Then, in accordance with a search request transmitted from a cache server 200 located within a downstream side area management center or a search request transmitted form an information terminal equipment POD, the search data of the search server 13 is searched, with the search result being transmitted back to request sender.

Further, the search server 13 of each cache server 200 operates to search in accordance with a request transmitted from a downstream side cache sever 200 or from an information terminal equipment POD. If a requested search data does not exist therein, the same request will be transmitted via a communication line LX to a cache server 200 provided within an upstream area management center, or will be transmitted via the same route to a center server 100 provided within a central management center closer to the request sender than any other central management centers.

Then, when a search data satisfying the above request is transmitted back, the transmitted-back search data is stored in the search server 13 and then transmitted back still further in the downstream direction.

In this way, the search server 13 within each cache server 200 operates not only to transmit back a search data in accordance with a request from the downstream side, but also to send the same request in the upstream direction (when a requested search data does not exist therein). Accordingly, a search data transmitted back from an upstream central management center can be stored automatically in the data base system DSYS of this area management center, and further transmitted in the downstream direction.

In this manner, the search server 13 accumulates new search data (obtained from the upstream side) and when there is the same request (as before) from the downstream side, sends the stored search data to the downstream side. Therefore, the search server 13 is not for sending a request to the central management centers #N1 - #Nk in accordance with a request transmitted from the downstream side, but for transmitting back the search data (accumulated gradually in the data base system in accordance with the requests from the information terminal equipments) in the downstream direction, thereby making it possible to transmit back the search data at a high speed and thus greatly reducing user' s waiting time.

Since the search servers 13 of the cache servers 200 are interposed between the information terminal equipments POD and the search servers 4 of the central management centers #N1 - #Nk, there would not be too frequent search requests transmitted from the information terminal equipments POD to the search servers 4 (Fig. 16) of the central management centers #N1 - #Nk. As a result, the communication lines LX are required to have only a small transmission capacity, thereby ensuring an effect that even if the transmission capacity of the communication lines LX is small, it is still possible to perform a search at a high speed in accordance with a user's request.

The contents server 14 includes the gateway 15 and a plurality of cluster servers 16 and 17. The data base systems DSYS (formed according to the first embodiment) provided in the cluster servers 16 and 17 are used to store music data of various songs (which are compressed audio data).

Although a large amount of music data to be distributed by the present information distribution system are stored in the cluster servers 7 - 9 of each center server 100, the cluster servers 16 and 17 of the cache servers 200 are used to store only the music data obtained in accordance with the requests from downstream side cache servers 200 and the information terminal equipments POD.

For example, the contents server 14 of the cache server 200 provided within the area management center #Ci (shown in Fig. 15) can be used to store the music data designated by the requests transmitted from the downstream side information terminal equipments POD1, POD2 and POD3.

Further, the contents server 14 of the cache server 200 provided within the area management center #C3 is used to store only the music data designated by a request transmitted via the area management center #C4 from the information terminal equipments PODS, POD6 and POD7, as well as the music data designated by a request transmitted from the information terminal equipment PODj.

A principle and operation for new music datas to be successively stored into the cluster servers 16 and 17 provided within the cache server 200 will be described later in the present specification.

In the above constitution, once a user sends via an information terminal equipment POD a request for distributing a music data of his or her desired song, such a user' s request will be received by the search server 13 which will in turn supply some information about the requested song to the gateway 15. Then, the gateway 15 will send a request for the music data to each of the cluster servers 16 and 17. In this way, the requested music data will be transmitted back from the cluster server 16 or the cluster server 17 storing the requested music data, via a communication line LX in the downstream direction.

On the other hand, it is also possible that the requested music data is not transmitted back all at one time, but is divided into several packets each having a predetermined data length, so that a total amount of the requested music data may be transmitted back through N times of transmission. In addition, it is further possible that the requested music data may be at first encrypted and then transmitted back. Meanwhile, decoding data for decoding the encrypted music data is also transmitted in the downstream direction.

Furthermore, the cluster servers 16 and 17 are used to store not only the music data, but also artist profile data in relation to various songs, as well as image data for demonstration. Therefore, the artist profile data and image data may also be transmitted back in the downstream direction, in accordance with a request from an information terminal equipment.

In fact, the two cluster servers 16 and 17 together form only an example. This means that the number of the cluster servers can be increased corresponding to an actual data amount to be stored therein.

Moreover, if a search result obtained after searching the cluster servers 16 and 17 indicates that these two cluster servers do not contain the music data requested by a user, the request for the desired music data may be transmitted to a cache server 200 provided in another upstream area management center, or may be transmitted to a center server 100 provided in a central management center which is closer to the request sender than any other central management centers. Namely, if the two cluster servers 16 and 17 do not contain the music data requested by a user, the title of a song requested by a user may be transmitted to the search server 13 of the upstream area management center 200 or a search server 4 of a center server 100 of a central management center,
so that the music data of the requested song can be transmitted back from the cluster servers provided within an upstream cache server 200 or an upstream center server 100.

Once the requested music data is transmitted back, the music data transmitted hereto will be stored in the cluster servers 16 and 17, and then is transmitted still further in the downstream direction.

Accordingly, the cluster servers 16 and 17 of the cache server 200 are provided not for transmitting back the music data in accordance with a request from the downstream side, but for transmitting the same request in the upstream direction (when the music data satisfying the request from the downstream side does not exist therein) . In this way, the music data transmitted back from any of the upstream central management centers #N1 ― #Nk may be accumulated in the respective data base systems DSYS of the area management centers and at the same time be transmitted in the downstream direction.

Therefore, the cluster servers 16 and 17 can receive and store new music data transmitted from the upstream side and then transmit the stored music data in the downstream direction (when at a next time the same request is sent from the downstream side). Accordingly, the contents server 14 is provided not for sending a request to the central management centers #N1 ― #Nk in accordance with the request transmitted from the downstream side, but for transmitting the gradually accumulated music data in the downstream direction. Accordingly, it becomes possible to transmit back the music data at a high speed, thereby greatly reducing a user' s waiting time.

Further, since the contents servers 14 of the cache servers 200 are disposed between the information terminal equipments POD and the contents servers 5 of the central management centers #N1 - #Nk, there would be no frequent requests (for obtaining music data) from the information terminal equipments POD to the contents servers 5 of the central management centers #N1 - #Nk (see Fig. 16). For this reason, each of the communication lines LX is allowed to have only a small transmission capacity, thereby making it possible to quickly satisfy the request of a user.

Fig. 18 is a block diagram showing the constitution of each information terminal equipment POD.

Referring to Fig. 18, each information terminal equipment POD comprises a router 18 and a HUB 19 (both serving as network interface connected with the communication lines LX. The HUB 19 is connected with a central operation controller 20, a history information memory 21, a recording medium recording device 22, a recording medium selling device 23, a print/printing device 24, a money management device 25, a demonstration display section 26, an audio information reproducing section 27, and a touch panel type operating section 28.

The central operation controller 20 contains a micro processor (MPU), and can process a predetermined system program to control the entire operation of each information terminal equipment POD.

The history information memory 21 contains a data base system DSYS having an improved fault tolerant property (as described in the first embodiment), so as to store as history data all the operations performed by each information terminal equipment POD in accordance with user's request. However, all the history data is stored under the control of the central operation controller 20.

In this way, even if a fault or a failure occurs in an information terminal equipment POD, a system manager can make an investigation into the history data stored in the data base system DSYS, thereby making it possible to quickly and exactly remove a cause responsible for the fault or failure. Further, by periodically transmitting history data to the central management centers #N1 - #Nk, it is responsible to perform a centralized management of all the information terminal equipments POD.

The recording medium recording device 22 includes an insertion opening (not show) allowing the insertion of an information recording medium such as an MD, also includes a recorder (not shown) for recording (down-loading) the music data transmitted hereto in the inserted recording medium.

In this way, once a user inserts an information recording medium into the recording device 22 through the insertion opening (not shown) and designates his or her desired song, the music data transmitted hereto may be encoded and recorded in the recording medium in accordance with a predetermined format. Then, the information recording medium is removed from the recording device through the insertion opening.

The recording medium selling device 23 is provided to stock a plurality of information recording mediums (unrecorded mediums) such as MDs, so that it can provide users with the recording mediums through a predetermined window (not shown) in accordance with each user's request.

The print/printing device 24 is provided to print various information on predetermined papers so as to provide users with printed information. Therefore, it is possible to print character data and image data relating to artist profile and new songs, so as to ensure the provision of these information in the printed form. Further, it is also possible to print lyric data corresponding to the songs requested by users.

Moreover, the information which can be printed should not be limited to the above-described types. In fact, it is also possible to add and renew the recoded data in accordance with user' s requests. Specifically, the data to be printed out is all supplied hereto via the communication lines LX from the central management centers #N1 ― #Nk.

The money management device 25 includes a money insertion slot (not shown), a money discriminating device (not shown) and a money box (not shown) . When a user inserts coins or bills into the money insertion slot in an amount corresponding to a price determined by a certain selling action of the system, the money discriminating device will determine whether the inserted money is true or not. If it is determined that the inserted money is true one, the selling action will be settled and account data will be stored in the history information storing section 21, while the inserted money will be accumulated and reserved in the money box. Besides, if an amount of inserted money is larger than a predetermined price, a small change will be returned to the user.

The demonstration display section 26 includes a CRT display or a liquid crystal display, also includes a video memory for storing image data to be later reproduced by a reproducing device . Further, the display section can also provide users with various visual informations such as promotion video introducing artist profile and new songs. Moreover, since these visual informations are supplied via communication lines LX from the central management centers #N1 - #Nk, it is possible to constantly provide users with latest informations.

The audio information reproducing section 27 comprises a digital audio system capable of reproducing artist profile data and new song data transmitted from the central management centers #N1 - #Nk, so as to provide users with audio information by means of sounding device such as a speaker. Moreover, since these audio informations are supplied via communication lines LX from the central management centers #N1 - #Nk, it is allowed to constantly provide users with latest informations. In addition, the audio information reproducing section 27 can also perform audible guidance to teach users about how to use an information terminal equipment POD.

The touch panel type operating section 28 is an operating panel equipped with a CRT display, capable of displaying a menu guiding a user how to perform his or her desired operation. When a user uses a finger to touch a screen on a CRT display to designate his or her desired menu, the designated menu will be detected by the central operation controller 20, thereby effecting a process in accordance with the user's designated menu.

In addition, the contents of menu display and a display state itself (display design) can be renewed. For example, it is possible to display a search menu for searching a user's desired songs, a selection menu for designating a user's desired songs, a menu for designating the selling of information recording medium by the information medium selling device 23, a menu for designating the selling of predetermined papers for use in the print/printing device, and a menu for changing over a reproduced content on the demonstration display 26.

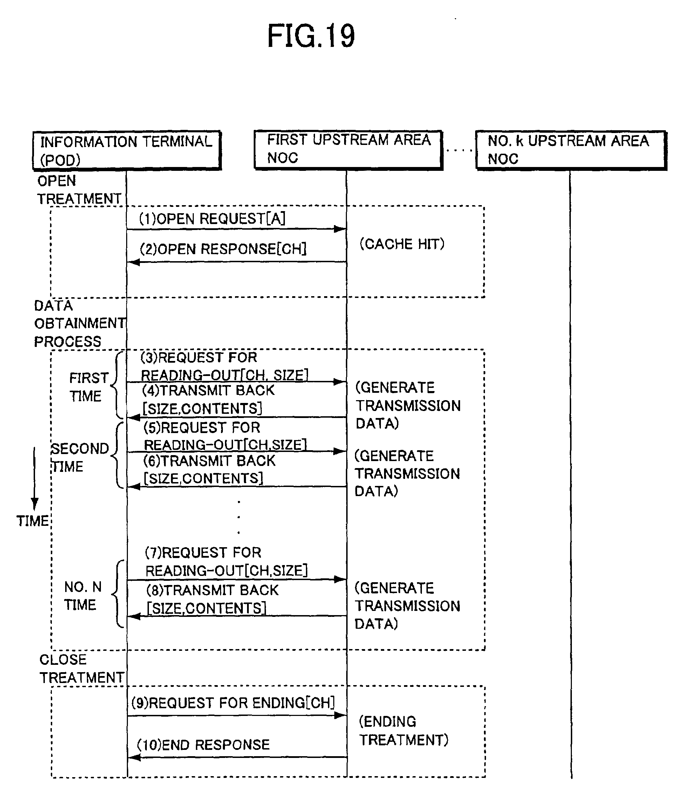

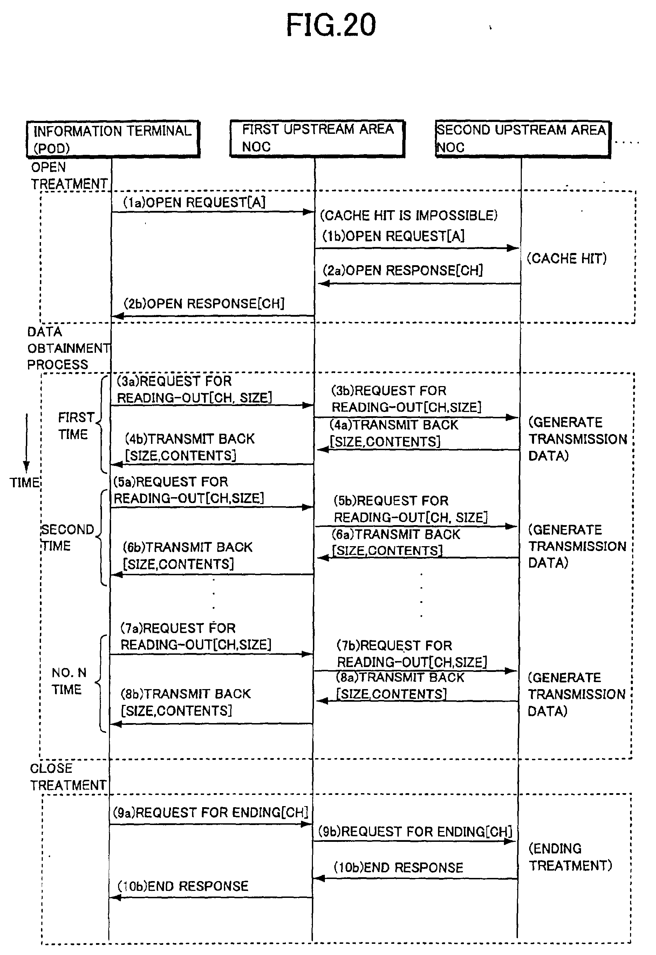

An example of operation of the information distribution system will be described below with reference to the flow charts shown in Fig. 19 and Fig. 20.

However, Fig. 19 and Fig. 20 only show an example in which a user operates any optional one information terminal equipment POD to request the distribution of musical data corresponding to his or her desired song. In fact, the following example starts with a data distribution request from an information terminal equipment POD1 (shown in Fig. 15).

Referring to Fig. 19, after a user has inserted an information recording medium such as an MD into the recording medium recording device 22 and has paid a predetermined amount of money to the money management device 25, he or she can operate on the touch panel type operating section 28 of an information terminal equipment POD so as to select his or her desired song [A], thereby starting an information distribution process.

At first, an open treatment request is transmitted from the information terminal equipment POD to a nearest upstream area management center (a first upstream area NOC). Here, the open treatment is performed for establishing a frequency band (channel) for a communication line LX provided for distributing information data to the information terminal equipment POD.

When there is an open treatment request, an open request (1) containing a data indicating the desired song [A] is transmitted out and received by a cache server 200 provided in the first upstream area NOC, so that a search server 13 can search for the desired song [A]. When the desired song [A] has been found (cache-hit), it is determined that music data corresponding to the desired song [A] has been stored in the cluster servers 16 and 17, so that an open response signal is transmitted back to the information terminal equipment POD.

Here, the open response signal (2) contains a channel data [CH] for establishing two-way communication and is transmitted back. Meanwhile, decoding data is also transmitted back with the open response signal (2).

In this way, the information terminal equipment POD receives the channel data [CH] , thereby realizing a two-way communication.

For example, when an open request (1) is transmitted from an information terminal equipment POD1 (shown in Fig. 15) and a cache server 200 of a nearest upstream area management center #Ci has been found (cache-hit), it can be determined that a two-way communication may be established between the information terminal equipment POD1 and the cache server 200. At this time, the area management center #C5 and the central management center #N1 (which are all located upstream of the area management center #Ci) are not related with the request from the information terminal equipment.

Referring again to Fig. 19, at this moment an information terminal equipment POD which has received the open response signal (2), starts a data obtainment process for obtaining music data corresponding to the user's selected song [A]. This process will be described in detail below.

At first, a reading-out request (3) is transmitted from the informationterminalequipment. At this time, the request contains a channel data [CH] and a size instruction data [SIZE] which is for packing the music data into a predetermined data length.

When the reading-out request (3) is received by the cache server 200 of the first upstream area NOC, the music data stored in the cluster server 16 or 17 is read out and is packed in accordance with the size instruction data [SIZE] . In this way, the data (for transmission) which has been packed in accordance with a predetermined length is called contents data, and once such contents data is reproduced, an initial contents data [CONTENTS] will be transmitted back to the information terminal equipment POD.

At this moment, since the contents data [CONTANTS] contains the size instruction data [SIZE], it can be made exact for the information terminal equipment POD to receive the contents data [CONTANTS]. The received contents data [CONTANTS] is then stored in a data buffer memory provided in the central operation controller 20 of the information terminal equipment.

Once the first data obtainment process is finished, a second data obtainment process (which is the same as the first data obtainment process) is repeated. In this way, since the music data may be divided into a plurality of packets while being distributed, several times of data obtainment process (5) - (8) can be carried out in the same manner as the first data obtainment process (3) - (4) until the transmission of all the data packets is completed.

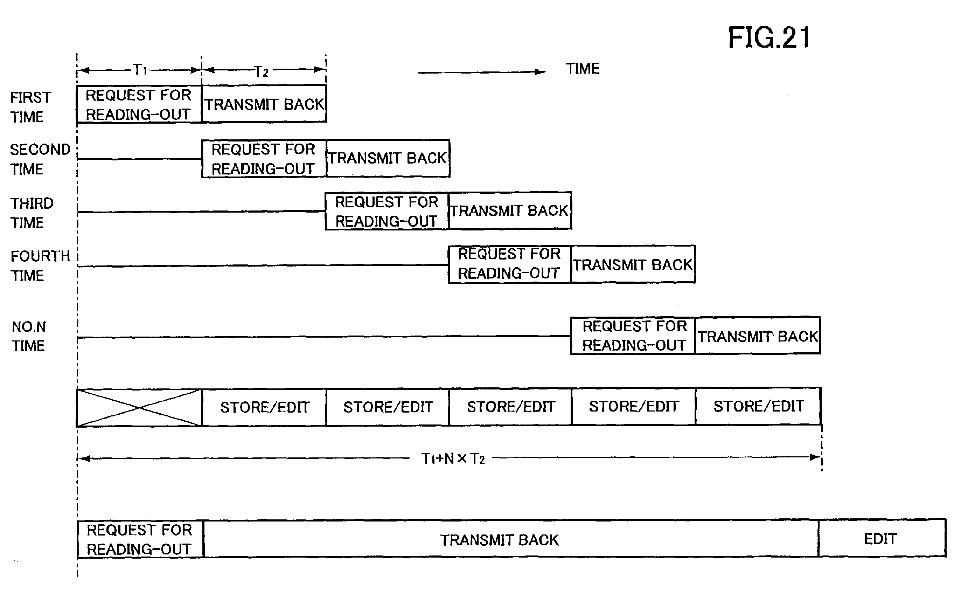

Further, as shown in Fig. 21, when an information terminal equipment POD is in its process of obtaining the contents data transmitted hereto (in No. 1 to No. N data obtainment processes) , the central operation controller 20 operates to decode the previously obtained contents data [CONTANTS]. The decoded contents data is then supplied to the recording medium recording device 22 so as to record the contents data in a recording medium such as MD. Namely, an information terminal equipment POD can parallelly perform the data obtainment process for obtaining the contents data and another process for at first decoding and then recording the contents data in an information recording medium.

In this way, after an information terminal equipment POD has received all the music data, the system then begins its closing process.

Namely, at first, an end request (9) containing the channel data [CH] is transmitted from the information terminal equipment POD to a cache server 200 provided in a first upstream area NOC. Meanwhile, an account data indicating that song [A] has been distributed and sold is also transmitted.

When the end request (9) is received by the cache server 200, the account data will be stored in the account management server 12. Further, the account data is also stored in the history data memory 21 of the information terminal equipment.

Next, an end response signal (10) is transmitted from the cache server 200 to the information terminal equipment POD, so that the channel which has been used from the beginning is closed, thereby rendering an information recording medium containing the desired music data to be supplied to the user, thus ending a series of data distribution processes.

However, the above end response data (10) also contains a confirmation data indicating that the above account data has been stored in the account management server 12 provided in the cache server 200.

In this way, when the music data of a user's desired song is existing in an area management center closest to the information terminal equipment POD, the desired data distribution can be carried out without any relation to other area management centers and other central management centers #N1 - #Nk located upstream of the above area management center. In this manner, the area management centers #Ci - #Ci are allowed to individually perform the above processes with respect to each of the information terminal equipments POD1 - PODj, thereby making it possible to greatly reduce a burden on the central management centers #Ni - #Nk. Moreover, since it is not necessary to lay down communication lines LX having a large capacity, communication lines having a small capacity are allowed to be used to similarly effect a high speed data distribution.

Furthermore, as shown in Fig. 21, the information terminal equipment POD, while waiting for the arrival of the contents data packed in accordance with a reading-out request, will operate to edit the previously obtained contents data and at the same time to record the contents data in an information recording medium. Therefore, a user is not required to wait for a long time before the completion of the data distribution. Namely, a time necessary for receiving all the music data can be divided into a time T1 for dealing with an initial reading-out request and a time T2 for dealing with the transmission-back of the requested music data, so that N times of transmission-back requires a total time of T1 + NxT2. As a result, at almost the same time the reception of all the music data is completed, a user can obtain an information recording medium having recorded thereon his or her desired musical data.

Usually, as shown in the lowest rank in Fig. 21, when a reading-out request is transmitted from an information terminal equipment to an upstream area management center, and when the area management center transmits all the music data continuously in accordance with the reading-out request, it will be difficult for the information terminal equipment to perform the editing and recording of the received music data until all the music data are received by the information terminal equipment POD. For this reason, since all the received music data has to be recorded in recording mediums, users are forced to wait for a considerable amount of time. In order to avoid such a problem, the present embodiment put the music data into a plurality of packets, thereby greatly reducing a time period necessary for carrying out the data distribution as well as for carrying the above-described process performed by the information terminal equipment POD.

Another example will be described below with reference to Fig. 20. This example is under such an assumption that the data of a user's desired song [A] is not existing in an upstream area management center (the first upstream area NOC) closest to POD, but existing in a further upstream area management center (the second upstream area NOC).

For example, when there is a data distribution request from an information terminal equipment POD1 shown in Fig. 15, but the data of a user's desired song [A] is not existing in an upstream area management center #Ci, only existing in a further upstream area management center #C5.

Then, as show in Fig. 20, the required data is transmitted to the information terminal equipment POD through the above-described open treatment, the data obtainment process and the closing treatment.

However, when there is an open request (1a), since the requested song is not existing in a nearest upstream area management center (the first upstream area NOC) and as a result there is not any cache-hit, an open request (1b) will be transmitted to a further upstream area management center (the second upstream area NOC).

In this way, once the second upstream area NOC gets a cache-hit, an open response signal (2a) will be transmitted back to the first upstream area NOC. Then, the first upstream area NOC will transmit back another open response signal (2b) to the information terminal equipment POD.

Therefore, a two-way communication can be established between the information terminal equipment POD and the second upstream area NOC, by way of the first upstream area NOC.

Further, in data obtainment process, music data is transmitted back from the second upstream area NOC to the information terminal equipment POD by way of the first upstream area NOC. Moreover, the music data is at first divided into a plurality of packets and then transmitted, N times of two-way communication may be carried out repeatedly until all the music data is obtained by the information terminal equipment. Besides, search data for searching the music data is transmitted back from the second upstream area NOC to the first upstream area NOC, thereby storing the search data in the search server 13 of the cache server 200 provided in the first upstream area NOC.

Subsequently, closing treatment is performed so as to terminate a series of the operations for the data distribution.

Here, an important fact may be understood by referring to Fig. 20. Namely, as shown by transmission-back steps (4a), (6a), (8a), when packed data contents [CONTENTS] are transmitted back from the second upstream area NOC to the first upstream area NOC, the cache server 200 provided within the first upstream area NOC will operate not only to transmit these contents data [CONTENTS] to an information terminal equipment POD, but also to store these contents data in the cluster servers 16 and 17.

Accordingly, when at a next time a request for the same music data is sent from the information terminal equipment, the cache server 200 of the first upstream area NOC will operate, in a manner shown in Fig. 19, to transmit out the music data from its own cluster servers 16 and 17.

Further, each time a song not existing in the cache server 200 of the first upstream area NOC is requested by an information terminal equipment POD, the data of the requested song will be at this moment stored into the cluster servers 16 and 17 of the cache server 200 provided within the first upstream area NOC. In this way, music data will be gradually accumulated in the first upstream area, thereby making rich the music data stored in the first upstream area.

Moreover, when a user's requested music data is also not existing in the second upstream area NOC shown in Fig. 20, the request will be sent to a further upstream area NOC. If the further upstream area also does not contain the requested song data, the requested music data will be distributed from one of the central management centers #N1 - #Nk, thereby requiring that the central management centers should always maintain various music data.

Further, the music data satisfying the users (who use the information terminal equipments POD1 - PODj) are gradually accumulated in the area management centers #C1 - #Ci shown in Fig. 15, so that it becomes possible to quickly provide users with music data satisfying their requests.

In the present embodiment it has been described that when a user' s requested music data is not existing in an area management center (which has received a data distribution request from an information terminal equipment POD), the data distribution request can be directly sent to an upstream area management center or a central management center.

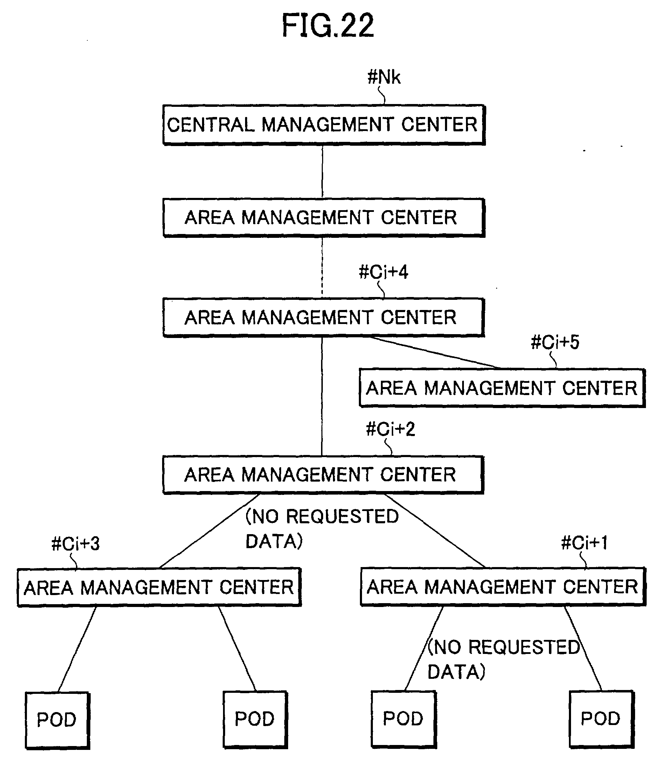

However, as shown in Fig. 22, an area management center (for example, #Ci+1) not containing a user's requested music data can directly send a request (for obtaining the user's requested music data) to a nearest upstream area management center (for example #Ci+2). If the upstream area management center #Ci+2 does not contain the requestedmusic data, either, the area management center #Ci+2 does not directly send the same request to a further upstream area management center (for example, #Ci+4). Instead, the same request is temporarily sent to another area management center (#Ci+3) located downstream of the area management center #Ci+2. If the area management center (#Ci+3) does not contain the user's requested music data, the user's request may be sent to another upstream area management center Ci+4.

Namely, when there are several area management centers #Ci+1 and #Ci+3 are connected in parallel with each other and both are located downstream of the area management center #Ci+2, the area management center #Ci+2 may become an operation center, so that it is possible to commonly utilize the music data stored in a plurality of area management centers #Ci+1 and #Ci+3 located close to each other (if converted to node numbers in the network).

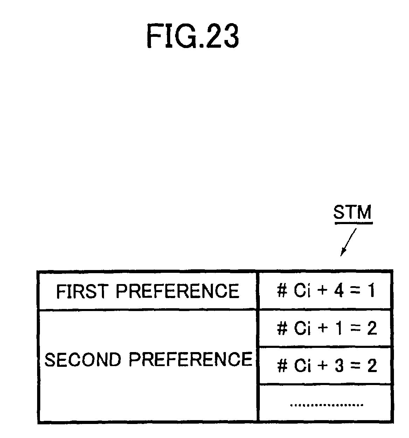

At this time, a stack memory STM shown in Fig. 23 may be installed in the cache server 200 of the area management center #Ci+2 (more exactly, in the search server 13). Then, preference order data is set in advance such that the upstream area management center #C1+4 is set at a first preference "#C1+4 = 1", the downstream area management centers #Ci+1 and #Ci+3 are respectively set at second preferences "#Ci+1=2" and "#Ci+3=2".

When there is a request (for obtaining music data) from the area management center #Ci+1 while the area management center #Ci+2 does not contain the requested music data, the cache server 200 within the area management center #Ci+2 will perform an investigation in accordance with the above preference order. Namely, the cache server 200 will at first send the request to the area management center #Ci+3 (corresponding to the second preference #Ci+3=2") . If the requested music data does not exist in the area management center #Ci+3, the same request will be sent to the upstream area management center #C1+4 (corresponding to the first preference #Ci+4=1).

In this way, a small network is formed which includes several surrounding area management centers, with one located in a branching node of the network serving as a center. As a result, when the information distribution system becomes a large in its scale, it is possible to form a reasonably individually processable system, permitting each of the central management centers #N1 - #Nk to have a reduced burden.

Furthermore, each area management center is so formed that some music data (whose use have become less frequent) may be gradually erased, thus obtaining an advantage that the capacities of the cluster servers 16 and 17 provided in each cache server 200 can be effectively used without any capacity loss.

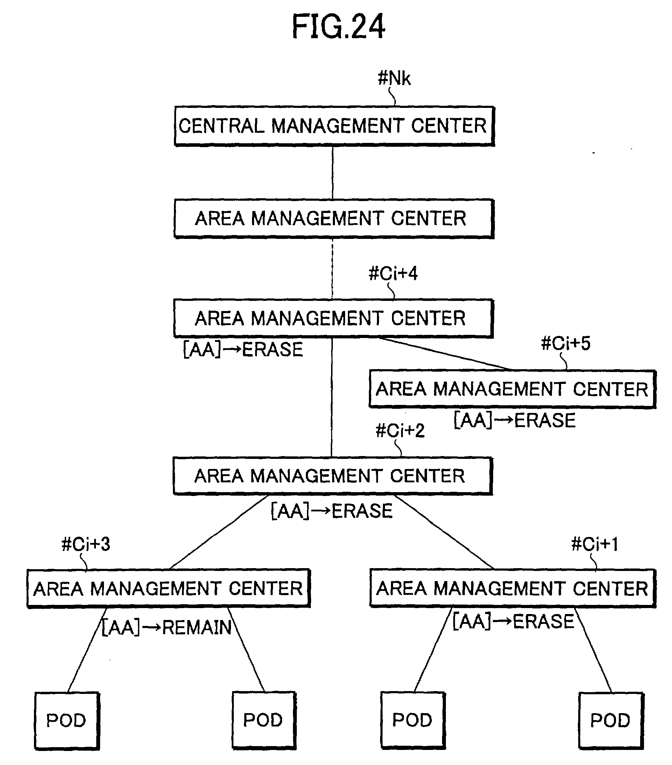

For example, when the same music data [AA] is existing in each of the area management centers #Ci+1 ― #Ci+5 (shown in Fig. 24), while users almost have no request (for obtaining the music data [AA]) sent to the area management centers #Ci+1, #Ci+2, #Ci+4 and #Ci+5 (only the area management center #Ci+3 receives the request from the information terminal equipment in connection with it), the cache server 200 provided in each of the area management centers #Ci+1, #Ci+2, #Ci+4 and #Ci+5 will operate to erase the less frequently sued music data [AA] in accordance with a predetermined use frequency threshold. On the other hand, in the area management center #Ci+3, since the frequency of using the music data [AA] is higher than the predetermined use frequency threshold, the cache server 200 of the area management center #Ci+3 will operate to keep the music data [AA].

In this way, when there is a request (for obtaining the music data [AA]) is sent from the area management center #Ci+1 to the upstream area management center #Ci+2, the upstream area management center #Ci+2 does not directly send the request to the upstream area management center #Ci+4 but to the area management center #Ci+3, thereby rendering the area management center #Ci+3 to transmit the music data [AA] to the area management center #Ci+1.

With the use of the above constitution, it can be made sure that the capacities of the cluster servers 16 and 17 provided in each cache server 200 can be effectively used without any capacity loss, making it possible to effect a quick data distribution in accordance with a user's request.

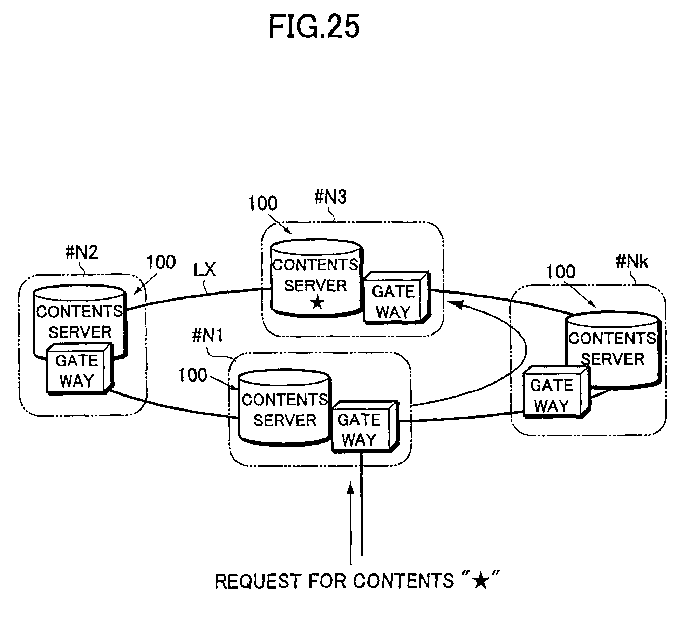

Next, Figs. 25 - 27 are used to describe how to effect a failure removal operation and how to perform an operation of individually processing contents data in the plurality of central management centers #N1 #Nk located in the uppermost positions in Fig. 15.

However, since the central management centers #N1 - #Nk are separately located and thus the failure removal operation and contents data processing may be individually performed, the following description is made only to explain the operation and processing performed in the central management center #N1.

Referring to Fig. 25, when a request (for obtaining a contents data " 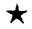 ") is transmitted from the downstream side to the central management center #N1, and if the contents data " 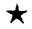 " is existing in the center server 100 of the central management center #N1, the contents data will be transmitted towards the downstream side.

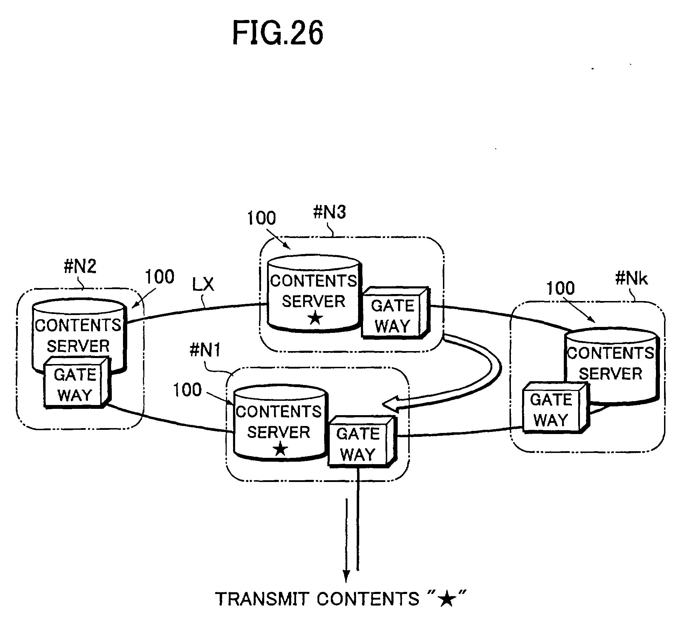

On the other hand, if the contents data " 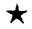 " is not existing in the center server 100 of the central management center #N1, its gateway will send the request to the center server 100 of each of the central management centers #N2 - #Nk. If the contents data " 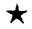 " is existing, for example, in the contents server 5 provided in the center server 100 of the central management center #N3, the center server 100 of the central management center #N3 will send the contents data " 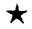 " to the central management center #N1, in a manner shown in Fig. 26. Subsequently, the central management center #N1 will operate to store the contents data " 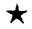 " in the contents server 5 of its center server 100, while at the same time distributing the data in the downstream direction.

Here, since other central management centers #Nk is existing between the central management center #N1 (which has sent out a data distribution request) and the central management center #N3 (which has received the data distribution request), the contents data " 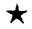 " will also be recorded in the contents server 5 of the center server 100 of the central management center #Nk.

In this way, even with the central management centers #N1 - #Nk located in the uppermost positions, the contents data are allowed to gradually disperse in accordance with a predetermined route, thereby rendering it possible to make a quick response to satisfy a user's request.

In fact, the central management centers #N1 - #Nk are so formed that the same contents data is repeatedly stored in these centers in accordance with a predetermined redundancy. Here, if a redundancy abnormity occurs in, for example, the first central management center #N1, the gateway of other central management center (for example, #N3) having a redundant relationship with the central management center #N1 will send a request to the gateways of the remaining central management centers #N2 - #Nk (not including #N3) to search for a receiver capable of performing data restoration.

Then, a response signal indicating OK for acting as the receiver is transmitted back from a central management center, and the gateway of the central management center #N3 operates to designate the central management center (for example #Nk which has sent out such a response signal) as a receiver for performing the data restoration, so as to transmit a contents data (for effecting the data restoration) to the center server 100 of the central management center #Nk and store the contents data in its contents server 5.

Namely, among the central management centers #N1 - #Nk, it is possible to perform the same restoration operations as in the data base systems DSYS described in the aforementioned first embodiment, thereby constantly maintaining a desired redundancy for each contents data in each central management center.

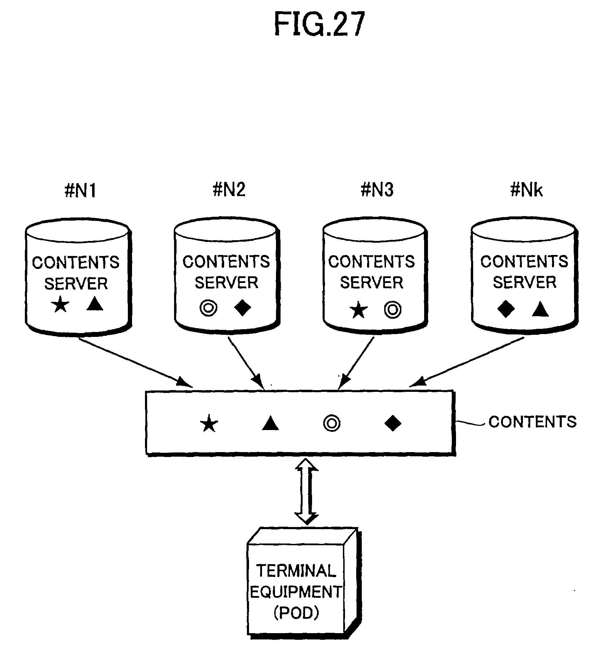

In this way, as shown in Fig. 27, when observing form the downstream side (information terminal equipment POD) towards the upstream side, it becomes possible to obtain (at any time) any contents data stored in the center servers 100 of the central management centers #N1 - #Nk.

According to the present embodiment, since it is possible to perform the aforementioned individual operations, it is possible to perform a high speed data distribution without having to use large capacity communication lines. Further, it is possible to establish an individually operable system capable of greatly reducing the burden on the center servers 100 provided within the central management centers #N1 - #Nk.

Furthermore, since it is possible to establish a network by virtue of the center servers 100 of the central management centers #N1 - #Nk and the cache severs 200 of the area management centers #C2 - #Ci, it is allowed to establish a network system capable of providing users with an improved convenience. Namely, it is possible to establish an On-Demand network system adapted to perform an accounting operation having a high reliability and an excellent extensibility.

Although the above description has been made mainly for explaining a distribution system for distributing audio data, the present embodiment can also be applied to a system for distributing video data at a high speed.

Further, an information recording medium should not be limited to MD. In fact, it is also possible to use writable CD and DVD.

In addition, although it has been described in the above embodiment that the communication lines LX may be commercial communication lines consisting of optical fibers or commercial communication lines consisting of coaxial cables, it is in fact also possible to use radio communication lines by providing radio network interfaces in the center servers 100, the cache servers 200 and the information terminal equipments POD. Moreover, the communication lines LX may also be formed by including both radio communication lines and wire communication lines.

Moreover, by making use of radio communication lines, the aforementioned information terminal equipments POD may be in the form of portable information terminal equipments.

### INDUSTRIAL APPLICABLIITY

In use of the data base system according to the present invention, when an abnormity occurs in any one of a plurality of the unit apparatuses and a failure has occurred in the information data stored in the memory within the failed unit apparatus, controlling means of another unit apparatus which has stored the data (data for use in restoration) and is one of the remaining normal unit apparatuses, will read out the data from its own memory and transmit the same to and store it in other normal unit apparatus. Therefore, it is possible to automatically maintain a predetermined redundancy, thereby ensuring the provision of a highly reliable data base system. Further, since restoration operation can be automatically performed among a plurality of unit apparatuses, it becomes possible to provide an individually processable data base system having a high universality.

Further, the information distribution system of the present invention is so formed that information data requested by users may be accumulated in the data base systems of relay apparatuses (area management centers) having not received a distribution request from any information terminal equipment. Accordingly, it is possible to reduce the frequency of sending data distribution request to the central data distribution apparatus (central management centers). As a result, when there is a request from an information terminal equipment, it is allowed to reduce a waiting time necessary for the requested data to arrive at information terminal equipment, thereby ensuring a high speed data distribution. Further, it is allowed to use communication lines having a small transmission capacity. In addition, by automatically restoring distributed information data, it is sure to provide a highly reliable information distribution system.

## Claims

1. A data base system including a plurality of unit apparatuses each containing memory means, the data base system being capable of recording data in the memory means in accordance with predetermined redundancies, said data base system comprising:
a controller provided in each unit apparatus; and
a gateway for communications among the controllers,
wherein when an abnormity occurs in any one of the unit apparatus, the gateway determines an abnormal unit apparatus involving the abnormity, and to send a restoration command to a controller provided in a normal unit apparatus storing the same data (restoration data) as previously stored in the abnormal unit apparatus,
meanwhile, the controller of the normal unit apparatus which has received the restoration command, transmits the restoration data to another normal unit apparatus not storing the restoration data and to store the same in the memory means provided in said another normal unit apparatus.

2. A data base system according to claim 1, wherein the gateway determines the occurrence of an abnormity, in accordance with an abnormity
occurrence signal transmitted from a controller provided within the abnormal unit apparatus having an abnormity.

3. A data base system according to claim 1 or 2, wherein the controller of the normal unit apparatus which has received the restoration command, operates to send a restoration request to each of the remaining unit apparatus, and to transmit the restoration data to a unit apparatus which has transmitted back a response signal in accordance with the restoration request.

4. A data base system according to any one of claims 1 to 3, wherein the controller of the normal unit apparatus which has received the restoration command, operates to specify a normal unit apparatus serving as a receiver for receiving the restoration data, the specifying process being performed in accordance with the predetermined redundancy.

5. A data base system according to any one of claims 1 to 4, wherein the plurality of unit apparatus are detachably installed in a housing of the data base system.

6. A data base system according to any one of claims 1 to 5, further comprising a network interface in connection with the plurality of unit apparatus and the gateway by way of communication lines.

7. An information distribution system comprising:
a plurality of central management centers which are connected in a communication network for performing overall management of various large amount of information data, and can transmit back information data in accordance with requests from the downstream side of the network;
a plurality of area management centers connected in the network via communication lines and located downstream of the central management centers, each area management center having an information storing system;
one or more information terminal equipments connected in the network via communication lines and located downstream of the central management centers or the area management centers, each information terminal equipment being able to send a data distribution request to any one of the central management centers or the area management centers for obtaining any information data which is under the overall management of the central management centers, and also being able to receive any information data transmitted back in accordance with the data distribution request,
wherein each area management center is adapted to receive any data distribution request from the one information terminal equipment or one of the more information terminal equipments located on the downstream side, when the requested information data has already been stored in its data base system, the stored information data is transmitted towards the downstream side of the network,
wherein when the requested information data is not stored in the data base system, the data distribution request is sent to an area management center located upstream of other area management centers or to an upstream central management center, the requested information data is then received from the area management center or the central management center having the requested information data, and sent to the downstream side of the network and stored there.

8. An information distribution system according to claim 7, wherein when a central management centers or an area management centers distribute the requested information data in the downstream direction, the requested information data is divided into a plurality of information packets which are later successively transmitted out.

9. An information distribution system according to claim 7 or 8, wherein
when the requested information data is not stored in an area management center which has received any data distribution request from an information terminal equipment located on the downstream side of the network, the area management center sends the same data distribution request to another downstream area management center,
when the requested information data has already been stored in said another downstream area management center, the requested information data is then received from said another downstream area management center and stored and further distributed in the downstream direction,
when there is a response indicating that the requested information data is not stored in said another downstream area management center, the data distribution request is then sent to an upstream area management center or to an upstream central management center.

10. An information distribution system according to any one of claims 7 to 9, wherein each information terminal equipment is provided with a recording device for recording in an information recording medium a requested information data transmitted back from the network upstream side in accordance with the data distribution request.

11. An information distribution system according to claim 10, wherein each information terminal equipment has a controller capable of selling information recording medium, transmitting accounting information concerning selling price to a central management center via an area management center, or directly transmitting the accounting information to the central management center.

12. An information distribution system according to claim 7, wherein each data base system includes a plurality of unit apparatuses each containing memory means, is capable of recording data in the memory means in accordance with predetermined redundancies, said data base system comprising:
a controller provided in each unit apparatus; and
a gateway for communications among the controllers,
wherein when an abnormity occurs in any one of the unit apparatus, the gateway determines an abnormal unit apparatus involving the abnormity, and to send a restoration command to a controller provided in a normal unit apparatus storing the same data (restoration data) as previously stored in the abnormal unit apparatus,
meanwhile, the controller of the normal unit apparatus which has received the restoration command, transmits the restoration data to another normal unit apparatus not storing the restoration data and to store the same in the memory means provided in said another normal unit apparatus.
